# EUROPEAN PATENT APPLICATION

(11) **EP 4 564 963 A1**
(43) Date of publication of application: **04.06.2025**
(21) Application number: 23849099.9
(22) Date of filing: 28.06.2023
(51) Int. Cl.: H04W 72/04

(54) **CAPABILITY REPORTING METHOD AND APPARATUS**

(30) Priority: 01.08.2022 CN 202210916377
(71) Applicant: Huawei Technologies Co., Ltd., Shenzhen, Guangdong 518129 (CN)
(72) Inventor: LIU, Yunfeng, Shenzhen, Guangdong 518129 (CN); GUO, Zhiheng, Shenzhen, Guangdong 518129 (CN); XIE, Xinqian, Shenzhen, Guangdong 518129 (CN); SONG, Xinghua, Shenzhen, Guangdong 518129 (CN)
(74) Representative: Maiwald GmbH
(86) International application number: PCT/CN2023/103340
(87) International publication number: WO 2024/027389

(57) **Abstract**

A method for reporting a capability and an apparatus are provided, to report a capability of simultaneously transmitting and receiving at a carrier component CC pair granularity or a bandwidth part BWP pair granularity in a frequency band. The method includes: A terminal device sends first information to a network device, where the first information indicates a capability of simultaneously transmitting and receiving of the terminal device on a CC pair or a BWP pair in a first frequency band. The simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair.

## Description

This application claims priority to Chinese Patent Application No. 202210916377.6, filed with the China National Intellectual Property Administration on August 1, 2022 and entitled " METHOD FOR REPORTING CAPABILITY AND APPARATUS", which is incorporated herein by reference in its entirety.

### TECHNICAL FIELD

Embodiments of this application relate to the communication field, and in particular, to a method for reporting a capability and an apparatus.

### BACKGROUND

A 5th generation (5th generation, 5G) new radio (new radio, NR) system is deployed on medium and high frequency bands, and implements a high data rate and low latency by using a large bandwidth. Currently, there are two duplex modes in the 5G NR system: time division duplexing (time division duplexing, TDD) and frequency division duplexing (frequency division duplexing, FDD).

In addition, to increase a peak rate of a terminal device, a carrier aggregation (carrier aggregation, CA) technology is introduced. A main idea of the CA technology is that carriers of a plurality of cells are aggregated and then provided for the terminal device to use. After the carrier aggregation, a bandwidth that can be enjoyed by the terminal device is a sum of bandwidths of a plurality of component carriers (component carriers, CCs), and the peak rate is greatly increased.

Regardless of the duplex modes or the CA technology, capabilities of simultaneously transmitting and receiving of the terminal device on different frequency domain resources are particularly important for processing such as scheduling of a network device. Therefore, it is necessary to design reporting of the capability of simultaneously transmitting and receiving of the terminal device.

### SUMMARY

This application provides a method for reporting a capability and an apparatus, to report a capability of simultaneously transmitting and receiving at a carrier component CC pair granularity or a bandwidth part BWP pair granularity in a frequency band.

According to a first aspect, a method for reporting a capability of simultaneously transmitting and receiving is provided. The method may be performed by a terminal device or a component of the terminal device, for example, a processor, a chip, or a chip system of the terminal device, or may be implemented by a logical module or software that can implement all or a part of functions of the terminal device. The method includes: sending first information to a network device, where the first information indicates a capability of simultaneously transmitting and receiving of a terminal device on a carrier component CC pair or a bandwidth part BWP pair in a first frequency band. The simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair.

Based on this solution, the terminal device may indicate the capability of simultaneously transmitting and receiving of the terminal device on the CC pair or the BWP pair in the first frequency band, to report a capability of simultaneously transmitting and receiving at a CC pair granularity or a BWP pair granularity in a frequency band. In other words, in comparison with reporting of a capability of simultaneously transmitting and receiving on a frequency band pair, a capability of simultaneously transmitting and receiving at a finer granularity can be reported, so that the network device can schedule the simultaneously transmitting and receiving at the CC pair granularity or the BWP pair granularity. This improves transmission flexibility.

In a possible design, the first information indicates a minimum frequency domain guard interval used when the terminal device supports the simultaneously transmitting and receiving, and the minimum frequency domain guard interval indicates the capability of simultaneously transmitting and receiving of the terminal device on the CC pair or the BWP pair in the first frequency band.

Based on the possible design, the terminal device reports, to the network device, the minimum frequency domain guard interval used when the simultaneously transmitting and receiving are supported, and the minimum frequency domain guard interval indicates the capability of simultaneously transmitting and receiving of the terminal device on the CC pair or the BWP pair. This can reduce information reported by the terminal device and reduce signaling overheads.

In a possible design, the first frequency band includes a first CC and a second CC, and a highest frequency of the first CC is less than a lowest frequency of the second CC. If a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

In a possible design, the first CC includes a first BWP, and the second CC includes a second BWP. If the frequency domain interval between the highest frequency of the first CC and the lowest frequency of the second CC is greater than or equal to the minimum frequency domain guard interval, the terminal device has a capability of simultaneously transmitting and receiving on the first BWP and the second BWP. Alternatively, if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

In a possible design, the first frequency band includes a third CC, the third CC includes a third BWP and a fourth BWP, and a highest frequency of the third BWP is less than a lowest frequency of the fourth BWP. If a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

In a possible design, the first information includes the minimum frequency domain guard interval. Alternatively, the minimum frequency domain guard interval is a guard interval in a frequency domain guard interval group, the frequency domain guard interval group includes one or more frequency domain guard intervals, and the first information includes an index of the minimum frequency domain guard interval in the frequency domain guard interval group.

In a possible design, the first information includes a first parameter. The first parameter indicates that the terminal device has the capability of simultaneously transmitting and receiving on any CC pair in the first frequency band. Alternatively, the first information includes a first parameter, and the first parameter indicates that the terminal device has the capability of simultaneously transmitting and receiving on any BWP pair in the first frequency band.

Based on the possible design, the first parameter indicates that the terminal device has the capability of simultaneously transmitting and receiving on any CC pair or BWP pair in the first frequency band. This can reduce information reported by the terminal device and reduce signaling overheads.

In a possible design, the first information includes a second parameter, the second parameter indicates a first CC pair, and the terminal device has a capability of simultaneously transmitting and receiving on the first CC pair. Alternatively, the first information includes a second parameter, the second parameter indicates a first BWP pair, and the terminal device has a capability of simultaneously transmitting and receiving on the first BWP pair.

Based on the possible design, the second parameter indicates that the terminal device has the capability of simultaneously transmitting and receiving on the first CC pair or the first BWP pair in the first frequency band. This can explicitly indicate the CC pair or the BWP pair that supports the terminal device in the simultaneously transmitting and receiving, and reduce implementation complexity of the network device.

In a possible design, if the first information includes neither a first parameter nor a second parameter, the terminal device has no capability of simultaneously transmitting and receiving on any CC pair or any BWP pair in the first frequency band. The first parameter indicates that the terminal device has the capability of simultaneously transmitting and receiving on any CC pair or BWP pair in the first frequency band, the second parameter indicates a first CC pair or a first BWP pair, and the terminal device has a capability of simultaneously transmitting and receiving on the first CC pair or the first BWP pair.

Based on the possible design, the first information carries neither the first parameter nor the second parameter, to indicate that the terminal device has no capability of simultaneously transmitting and receiving on any CC pair or any BWP pair in the first frequency band. This can reduce information reported by the terminal device and reduce signaling overheads.

In a possible design, the method further includes: receiving second information from the network device, where the second information is used to configure an available CC, and the available CC includes a CC in the first frequency band.

In a possible design, the first information indicates a capability of simultaneously transmitting and receiving of the terminal device on a subband pair in the first frequency band, and the capability of simultaneously transmitting and receiving of the terminal device on the subband pair in the first frequency band indicates the capability of simultaneously transmitting and receiving of the terminal device on the CC pair or the BWP pair in the first frequency band.

Based on the possible design, the capability of simultaneously transmitting and receiving of the terminal device on the subband pair indicates the capability of simultaneously transmitting and receiving of the terminal device on the CC pair or the BWP pair, so that the capability of simultaneously transmitting and receiving on the CC pair is reported in a scenario in which a frequency band is divided into subbands, and the capability of simultaneously transmitting and receiving on the BWP pair is reported in a scenario in which the CC is divided into subbands.

In a possible design, the first information includes a third parameter, and the third parameter indicates that the terminal device has a capability of simultaneously transmitting and receiving on any subband pair in the first frequency band.

Based on the possible design, the third parameter indicates that the terminal device has the capability of simultaneously transmitting and receiving on any subband pair in the first frequency band. This can reduce information reported by the terminal device and reduce signaling overheads.

In a possible design, the first information includes a fourth parameter, the fourth parameter indicates a first subband pair, and the terminal device has a capability of simultaneously transmitting and receiving on the first subband pair.

Based on the possible design, the fourth parameter indicates that the terminal device has the capability of simultaneously transmitting and receiving on the first subband pair in the first frequency band. This can explicitly indicate the subband pair that supports the terminal device in the simultaneously transmitting and receiving, and reduce implementation complexity of the network device.

In a possible design, if the first information includes neither a third parameter nor a fourth parameter, the terminal device has no capability of simultaneously transmitting and receiving on any subband pair in the first frequency band. The third parameter indicates that the terminal device has the capability of simultaneously transmitting and receiving on any subband pair in the first frequency band, the fourth parameter indicates a first subband pair, and the terminal device has a capability of simultaneously transmitting and receiving on the first subband pair.

Based on the possible design, the first information carries neither the third parameter nor the fourth parameter, to indicate that the terminal device has no capability of simultaneously transmitting and receiving on any subband pair in the first frequency band. This can reduce information reported by the terminal device and reduce signaling overheads.

In a possible design, if the CC pair or the BWP pair in the first frequency band belongs to a same subband in the first frequency band, the terminal device has no capability of simultaneously transmitting and receiving on the CC pair or the BWP pair.

In a possible design, different subbands in the first frequency band do not overlap. The first frequency band includes a fourth CC and a fifth CC. The fourth CC and each subband in a first subband set in the first frequency band partially or completely overlap, and the fifth CC each subband in a second subband set in the first frequency band partially or completely overlap. The first subband set and the second subband set include one or more subbands in the first frequency band. If the terminal device has a capability of simultaneously transmitting and receiving on any subband in the first subband set and any subband in the second subband set, the terminal device has a capability of simultaneously transmitting and receiving on the fourth CC and the fifth CC.

In a possible design, the subband pair in the first frequency band is a subband pair in a sixth CC in the first frequency band.

In a possible design, if a BWP pair in the sixth CC belongs to a same subband in the sixth CC, the terminal device has no capability of simultaneously transmitting and receiving on the BWP pair.

In a possible design, different subbands in the sixth CC do not overlap. The sixth CC includes a fifth BWP and a sixth BWP. The fifth BWP and each subband in a third subband set in the sixth CC partially or completely overlap, and the sixth BWP and each subband in a fourth subband set in the sixth CC partially or completely overlap. The third subband set and the fourth subband set include one or more subbands in the sixth CC. If the terminal device has a capability of simultaneously transmitting and receiving on any subband in the third subband set and any subband in the fourth subband set, the terminal device has a capability of simultaneously transmitting and receiving on the fifth BWP and the sixth BWP.

In a possible design, the method further includes: receiving third information from the network device, where the third information is used to configure a frequency domain range of a subband in the first frequency band.

According to a second aspect, a method for reporting a capability of simultaneously transmitting and receiving is provided. The method may be performed by a network device or a component of the network device, for example, a processor, a chip, or a chip system of the network device, or may be implemented by a logical module or software that can implement all or a part of functions of the network device. The method includes: receiving first information from a terminal device, where the first information indicates a capability of simultaneously transmitting and receiving of the terminal device on a carrier component CC pair or a bandwidth part BWP pair in a first frequency band. The simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair. For technical effects brought by the second aspect, refer to the technical effects brought by the first aspect. Details are not described herein again.

In a possible design, the first information indicates a minimum frequency domain guard interval used when the terminal device supports the simultaneously transmitting and receiving, and the minimum frequency domain guard interval indicates the capability of simultaneously transmitting and receiving of the terminal device on the CC pair or the BWP pair in the first frequency band.

In a possible design, the first frequency band includes a first CC and a second CC, and a highest frequency of the first CC is less than a lowest frequency of the second CC. If a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

In a possible design, the first CC includes a first BWP, and the second CC includes a second BWP. If the frequency domain interval between the highest frequency of the first CC and the lowest frequency of the second CC is greater than or equal to the minimum frequency domain guard interval, the terminal device has a capability of simultaneously transmitting and receiving on the first BWP and the second BWP. Alternatively, if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

In a possible design, the first frequency band includes a third CC, the third CC includes a third BWP and a fourth BWP, and a highest frequency of the third BWP is less than a lowest frequency of the fourth BWP. If a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

In a possible design, the first information includes the minimum frequency domain guard interval. Alternatively, the minimum frequency domain guard interval is a guard interval in a frequency domain guard interval group, the frequency domain guard interval group includes one or more frequency domain guard intervals, and the first information includes an index of the minimum frequency domain guard interval in the frequency domain guard interval group.

In a possible design, the first information includes a first parameter, and the first parameter indicates that the terminal device has the capability of simultaneously transmitting and receiving on any CC pair in the first frequency band. Alternatively, the first information includes a first parameter, and the first parameter indicates that the terminal device has the capability of simultaneously transmitting and receiving on any BWP pair in the first frequency band.

In a possible design, the first information includes a second parameter, the second parameter indicates a first CC pair, and the terminal device has a capability of simultaneously transmitting and receiving on the first CC pair. Alternatively, the first information includes a second parameter, the second parameter indicates a first BWP pair, and the terminal device has a capability of simultaneously transmitting and receiving on the first BWP pair.

In a possible design, if the first information includes neither a first parameter nor a second parameter, the terminal device has no capability of simultaneously transmitting and receiving on any CC pair or any BWP pair in the first frequency band. The first parameter indicates that the terminal device has the capability of simultaneously transmitting and receiving on any CC pair or BWP pair in the first frequency band, the second parameter indicates a first CC pair or a first BWP pair, and the terminal device has a capability of simultaneously transmitting and receiving on the first CC pair or the first BWP pair.

In a possible design, the method further includes: sending second information to the terminal device, where the second information is used to configure an available CC, and the available CC includes a CC in the first frequency band.

In a possible design, the first information indicates a capability of simultaneously transmitting and receiving of the terminal device on a subband pair in the first frequency band, and the capability of simultaneously transmitting and receiving of the terminal device on the subband pair in the first frequency band indicates the capability of simultaneously transmitting and receiving of the terminal device on the CC pair or the BWP pair in the first frequency band.

In a possible design, the first information includes a third parameter, and the third parameter indicates that the terminal device has a capability of simultaneously transmitting and receiving on any subband pair in the first frequency band.

In a possible design, the first information includes a fourth parameter, the fourth parameter indicates a first subband pair, and the terminal device has a capability of simultaneously transmitting and receiving on the first subband pair.

In a possible design, if the first information includes neither a third parameter nor a fourth parameter, the terminal device has no capability of simultaneously transmitting and receiving on any subband pair in the first frequency band. The third parameter indicates that the terminal device has the capability of simultaneously transmitting and receiving on any subband pair in the first frequency band, the fourth parameter indicates a first subband pair, and the terminal device has a capability of simultaneously transmitting and receiving on the first subband pair.

In a possible design, if the CC pair or the BWP pair in the first frequency band belongs to a same subband in the first frequency band, the terminal device has no capability of simultaneously transmitting and receiving on the CC pair or the BWP pair.

In a possible design, different subbands in the first frequency band do not overlap. The first frequency band includes a fourth CC and a fifth CC. The fourth CC and each subband in a first subband set in the first frequency band partially or completely overlap, and the fifth CC each subband in a second subband set in the first frequency band partially or completely overlap. The first subband set and the second subband set include one or more subbands in the first frequency band. If the terminal device has a capability of simultaneously transmitting and receiving on any subband in the first subband set and any subband in the second subband set, the terminal device has a capability of simultaneously transmitting and receiving on the fourth CC and the fifth CC.

In a possible design, the subband pair in the first frequency band is a subband pair in a sixth CC in the first frequency band.

In a possible design, if a BWP pair in the sixth CC belongs to a same subband in the sixth CC, the terminal device has no capability of simultaneously transmitting and receiving on the BWP pair.

In a possible design, different subbands in the sixth CC do not overlap. The sixth CC includes a fifth BWP and a sixth BWP. The fifth BWP and each subband in a third subband set in the sixth CC partially or completely overlap, and the sixth BWP and each subband in a fourth subband set in the sixth CC partially or completely overlap. The third subband set and the fourth subband set include one or more subbands in the sixth CC. If the terminal device has a capability of simultaneously transmitting and receiving on any subband in the third subband set and any subband in the fourth subband set, the terminal device has a capability of simultaneously transmitting and receiving on the fifth BWP and the sixth BWP.

In a possible design, the method further includes: sending third information to the terminal device, where the third information is used to configure a frequency domain range of a subband in the first frequency band.

For technical effects brought by any possible design of the second aspect, refer to the technical effects brought by a corresponding design in the first aspect. Details are not described herein again.

According to a third aspect, a method for reporting a capability of simultaneously transmitting and receiving is provided. The method may be performed by a terminal device or a component of the terminal device, for example, a processor, a chip, or a chip system of the terminal device, or may be implemented by a logical module or software that can implement all or a part of functions of the terminal device. The method includes: sending first information to a network device, where the first information indicates a capability of simultaneously transmitting and receiving of the terminal device on a subband pair in a first frequency band, and the simultaneously transmitting and receiving means sending a signal on one subband in the subband pair while receiving a signal on the other subband in the subband pair. The first frequency band includes a first subband, a second subband, and a third subband, the first subband includes a part or all of an uplink frequency band of a second frequency band, the second subband includes a part or all of a downlink frequency band of the second frequency band, and the third subband includes a frequency domain range of an interval between the uplink frequency band of the second frequency band and the downlink frequency band of the second frequency band.

Based on the foregoing solution, the part or all of the uplink frequency band and the part or all of the downlink frequency band of the second frequency band, and the guard interval between the uplink frequency band and the downlink frequency band of the second frequency band are redefined as the first frequency band, so that the network device can schedule the terminal device to perform data transmission in the first frequency band. This fully utilizes the guard interval and improves resource utilization. In addition, the terminal device may report the capability of simultaneously transmitting and receiving of the terminal device on the subband pair in the first frequency band, so that the network device can perform proper scheduling based on the capability of simultaneously transmitting and receiving of the terminal device. This reduces interference between uplink transmission and downlink transmission and improves communication efficiency.

In a possible design, an uplink frequency band of the first frequency band and a downlink frequency band of the first frequency band completely overlap.

In a possible design, the first information indicates that the terminal device has a capability of simultaneously transmitting and receiving on a first subband pair, but has no capability of simultaneously transmitting and receiving on a second subband pair or a third subband pair. The first subband pair includes the first subband and the second subband, the second subband pair includes the first subband and the third subband, and the third subband pair includes the second subband and the third subband.

Based on the possible design, because the first subband includes the part of or all of the uplink frequency band of the second frequency band, the second subband includes the part or all of the downlink frequency band of the second frequency band, and there is the frequency domain guard interval between the first subband and the second subband, mutual interference between transmitting and receiving can be reduced when the terminal device performs simultaneously transmitting and receiving on the first subband and the second subband. In addition, although the terminal device has no capability of simultaneously transmitting and receiving on the second subband pair or the third subband pair, because the first frequency band includes the frequency domain guard interval (that is, the third subband) of the second frequency band, the network device may schedule the terminal device to perform uplink transmission on the first subband and the third subband, or may schedule the terminal device to perform uplink transmission on the entire first frequency band. This increases an uplink transmission bandwidth and an uplink data rate.

In a possible design, the first information includes an index of the first frequency band and flag information, and the flag information indicates that the terminal device has the capability of simultaneously transmitting and receiving on the first subband pair, but has no capability of simultaneously transmitting and receiving on the second subband pair or the third subband pair.

Based on the possible design, the index of the first frequency band and the flag information indicate the capability of simultaneously transmitting and receiving of the terminal device on the subband pair in the first frequency band. This can reduce information reported by the terminal device and reduce signaling overheads.

According to a fourth aspect, a method for reporting a capability of simultaneously transmitting and receiving is provided. The method may be performed by a network device or a component of the network device, for example, a processor, a chip, or a chip system of the network device, or may be implemented by a logical module or software that can implement all or a part of functions of the network device. The method includes: receiving first information from a terminal device, where the first information indicates a capability of simultaneously transmitting and receiving of the terminal device on a subband pair in a first frequency band, and the simultaneously transmitting and receiving means sending a signal on one subband in the subband pair while receiving a signal on the other subband in the subband pair. The first frequency band includes a first subband, a second subband, and a third subband, the first subband includes a part or all of an uplink frequency band of a second frequency band, the second subband includes a part or all of a downlink frequency band of the second frequency band, and the third subband includes a frequency domain range of an interval between the uplink frequency band of the second frequency band and the downlink frequency band of the second frequency band. For technical effects brought by the fourth aspect, refer to the technical effects brought by the third aspect. Details are not described herein again.

**In** a possible design, an uplink frequency band of the first frequency band and a downlink frequency band of the first frequency band completely overlap.

**In** a possible design, the first information indicates that the terminal device has a capability of simultaneously transmitting and receiving on a first subband pair, but has no capability of simultaneously transmitting and receiving on a second subband pair or a third subband pair. The first subband pair includes the first subband and the second subband, the second subband pair includes the first subband and the third subband, and the third subband pair includes the second subband and the third subband.

In a possible design, the first information includes an index of the first frequency band and flag information, and the flag information indicates that the terminal device has the capability of simultaneously transmitting and receiving on the first subband pair, but has no capability of simultaneously transmitting and receiving on the second subband pair or the third subband pair.

For technical effects brought by any possible design of the fourth aspect, refer to the technical effects brought by a corresponding design in the third aspect. Details are not described herein again.

According to a fifth aspect, a communication apparatus is provided, and is configured to implement various methods. The communication apparatus may be the terminal device in the first aspect or the third aspect, or an apparatus included in the terminal device, for example, a chip or a chip system. Alternatively, the communication apparatus may be the network device in the second aspect or the fourth aspect, or an apparatus included in the network device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to the functions.

In some possible designs, the communication apparatus may include a processing module and a transceiver module. The processing module may be configured to implement a processing function in any one of the foregoing aspects and the possible implementations thereof. The transceiver module may include a receiving module and a sending module, respectively configured to implement a receiving function and a sending function in any one of the foregoing aspects and the possible implementations thereof.

In some possible designs, the transceiver module may include a transceiver circuit, a transceiver machine, a transceiver, or a communication interface.

According to a sixth aspect, a communication apparatus is provided, and includes a processor and a memory. The memory is configured to store computer instructions. When the processor executes the instructions, the communication apparatus is enabled to perform the method in any one of the aspects. The communication apparatus may be the terminal device in the first aspect or the third aspect, or an apparatus included in the terminal device, for example, a chip or a chip system. Alternatively, the communication apparatus may be the network device in the second aspect or the fourth aspect, or an apparatus included in the network device, for example, a chip or a chip system.

According to a seventh aspect, a communication apparatus is provided, and includes a processor and a communication interface. The communication interface is configured to communicate with a module outside the communication apparatus. The processor is configured to execute a computer program or instructions, to enable the communication apparatus to perform the method according to any one of the aspects. The communication apparatus may be the terminal device in the first aspect or the third aspect, or an apparatus included in the terminal device, for example, a chip or a chip system. Alternatively, the communication apparatus may be the network device in the second aspect or the fourth aspect, or an apparatus included in the network device, for example, a chip or a chip system.

According to an eighth aspect, a communication apparatus is provided, and includes at least one processor. The processor is configured to execute a computer program or instructions stored in a memory, to enable the communication apparatus to perform the method according to any one of the aspects. The memory may be coupled to the processor, or may be independent of the processor. The communication apparatus may be the terminal device in the first aspect or the third aspect, or an apparatus included in the terminal device, for example, a chip or a chip system. Alternatively, the communication apparatus may be the network device in the second aspect or the fourth aspect, or an apparatus included in the network device, for example, a chip or a chip system.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the aspects.

According to a tenth aspect, a computer program product including instructions is provided. When the computer program product runs on a communication apparatus, the communication apparatus is enabled to perform the method according to any one of the aspects.

According to an eleventh aspect, a communication apparatus (for example, the communication apparatus may be a chip or a chip system) is provided. The communication apparatus includes a processor, configured to implement a function in any one of the aspects.

In some possible designs, the communication apparatus includes a memory, and the memory is configured to store necessary program instructions and data.

In some possible designs, when the apparatus is the chip system, the apparatus may include a chip, or may include the chip and another discrete component.

It may be understood that when the communication apparatus provided in any one of the fifth aspect to the eleventh aspect is the chip, a sending action/function of the communication apparatus may be understood as output information, and a receiving action/function of the communication apparatus may be understood as input information.

For technical effects brought by any one of the design manners of the fifth aspect to the eleventh aspect, refer to the technical effects brought by different design manners of the first aspect, the second aspect, the third aspect, or the fourth aspect. Details are not described herein again.

### BRIEF DESCRIPTION OF DRAWINGS

FIG. 1 is a diagram of an architecture of a communication system according to this application;
FIG. 2 is a diagram of uplink and downlink resources in a TDD mode according to this application;
FIG. 3a is a diagram of subband fullduplex according to this application;
FIG. 3b is a diagram of single frequency fullduplex according to this application;
FIG. 4 is a diagram in which an FDD frequency band is used for one or more operators according to this application;
FIG. 5 is a diagram of intra-band contiguous carrier aggregation according to this application;
FIG. 6 is a diagram of intra-band non-contiguous carrier aggregation according to this application;
FIG. 7 is a diagram of inter-band carrier aggregation according to this application;
FIG. 8 is a diagram of simultaneously transmitting and receiving according to this application;
FIG. 9 is a schematic flowchart of a method for reporting a capability of simultaneously transmitting and receiving according to this application;
FIG. 10 is a schematic flowchart of another method for reporting a capability of simultaneously transmitting and receiving according to this application;
FIG. 11a is a schematic flowchart of still another method for reporting a capability of simultaneously transmitting and receiving according to this application;
FIG. 11b is a diagram of a relationship between a frequency band, subbands, subband sets, and CCs according to this application;
FIG. 11c is a diagram of another relationship between a frequency band, subbands, subband sets, and CCs according to this application;
FIG. 12 is a schematic flowchart of yet another method for reporting a capability of simultaneously transmitting and receiving according to this application;
FIG. 13 is a diagram of a structure of a first frequency band according to this application;
FIG. 14 is a diagram of a structure of another first frequency band according to this application;
FIG. 15 is a diagram of a structure of still another first frequency band according to this application;
FIG. 16 is a diagram of frequency band division according to this application;
FIG. 17 is a diagram of a structure of yet another first frequency band according to this application;
FIG. 18 is a diagram of a structure of a communication apparatus according to this application;
FIG. 19 is a diagram of a structure of another communication apparatus according to this application; and
FIG. 20 is a diagram of a structure of still another communication apparatus according to this application.

### DESCRIPTION OF EMBODIMENTS

In descriptions of this application, unless otherwise specified, "/" indicates that associated objects are in an "or" relationship, for example, A/B may represent A or B. "And/or" in this application merely describes an association relationship between associated objects and indicates that three relationships may exist. For example, A and/or B may represent three cases: Only A exists, both A and B exist, and only B exists, where A and B may be singular or plural.

In the descriptions of this application, unless otherwise specified, "a plurality of" means two or more than two. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not limit a definite difference either.

In embodiments of this application, the word "example" or "for example" indicates giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a related concept in a specific manner for ease of understanding.

It may be understood that an "embodiment" mentioned throughout this specification means that particular features, structures, or characteristics related to the embodiment are included in at least one embodiment of this application. Therefore, embodiments throughout this specification are not necessarily a same embodiment. In addition, these particular features, structures, or characteristics may be combined in one or more embodiments in any suitable manner. It may be understood that sequence numbers of the processes do not mean execution sequences in various embodiments of this application. The execution sequences of the processes should be determined based on functions and internal logic of the processes, and should not constitute any limitation on implementation processes of embodiments of this application.

It may be understood that in this application, both "when" and "if" mean that corresponding processing is performed in an objective situation, are not intended to limit time, do not require a determining action during implementation, and do not mean that there is another limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatuses provided in embodiments of this application may also correspondingly implement these features or functions. Details are not described herein.

In this application, unless otherwise specified, for same or similar parts of embodiments, refer to each other. In embodiments of this application, unless otherwise specified or a logical conflict occurs, terms and/or descriptions in different embodiments are consistent and may be mutually referenced, and different embodiments may be combined based on an internal logical relationship thereof, to form a new embodiment. The following implementations of this application do not constitute a limitation on the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, internet of things (Internet of Things, IoT), another next-generation communication system, and the like. Alternatively, the communication system may be a non-3GPP communication system. This is not limited.

The foregoing communication systems to which this application is applicable are merely examples for description, and communication systems to which this application is applicable are not limited thereto. This is uniformly described herein. Details are not described below again.

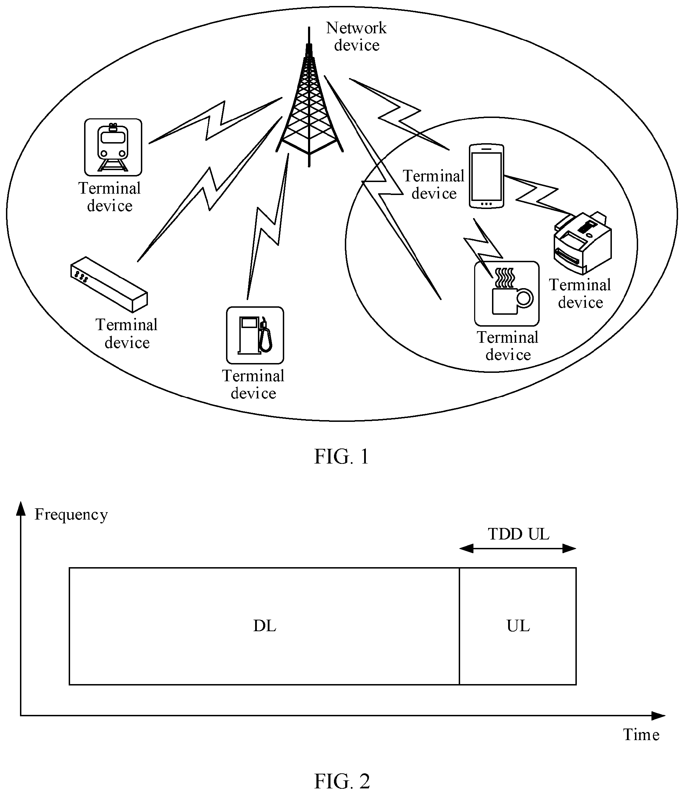

FIG. 1 shows an example of a communication system according to this application. The communication system includes a network device and at least one terminal device. Optionally, different terminal devices may communicate with each other.

Optionally, the network device is a device for connecting a terminal device to a wireless network, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; may be a next generation NodeB (next generation NodeB, gNodeB or gNB) in a 5G system; may be a transmission reception point (transmission reception point, TRP); may be a base station in a future evolved public land mobile network (public land mobile network, PLMN); may be a broadband network gateway (broadband network gateway, BNG), an aggregation switch, or a non-3GPP access device; may be a radio controller in a cloud radio access network (cloud radio access network, CRAN); may be an access node (access point, AP) in a Wi-Fi system; may be a radio relay node or a radio backhaul node; or may be a device for implementing a base station function in an IoT, a device for implementing a base station function in V2X, a device for implementing a base station function in D2D, or a device for implementing a base station function in M2M. This is not specifically limited in this embodiment of this application.

For example, the base station in this embodiment of this application may include base stations in various forms, for example, a macro base station, a micro base station (also referred to as a small cell), a relay station, and an access point. This is not specifically limited in this embodiment of this application.

Optionally, during specific implementation, the network device may be a central unit (central unit, CU), or the network device may include a CU and a distributed unit (distributed unit, DU). The CU and the DU may be divided based on protocol layers of a wireless network. For example, functions of a radio resource control (radio resource control, RRC) protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, and a physical (physical, PHY) layer are set in the DU.

It may be understood that division into processing functions of the CU and the DU based on the protocol layers is merely an example, and division may alternatively be performed in another manner. This is not specifically limited in this embodiment of this application.

In some embodiments, the CU may include a CU control plane (CU control plane, CU-CP) and a CU user plane (CU user plane, CU-UP).

Optionally, the terminal device may be a user-side device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device may be deployed on land, and includes an indoor device, an outdoor device, a handheld device, or a vehicle-mounted device; may be deployed on water (for example, on a ship); or may be deployed in air (for example, on a plane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a computing device or another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in remote telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

To facilitate understanding of the technical solutions in embodiments of this application, the following first briefly describes technologies related to this application.

### 1. Duplex mode (Duplex Mode)

Currently, a duplex mode in a mobile communication system is classified into time division duplexing (time division duplexing, TDD) and frequency division duplexing (frequency division duplexing, FDD). In the TDD mode, transmitting and receiving of a communication device are performed at different time on a same frequency domain resource. In the FDD mode, transmitting and receiving of the communication device may be performed simultaneously on different frequency domain resources.

In the TDD mode, for example, as shown in FIG. 2, a downlink (downlink, DL) occupies more time domain resources than an uplink (uplink, UL). In other words, in the TDD mode, UL coverage and DL coverage are unbalanced. The uplink coverage is weaker, and latency is higher.

To solve problems of the uplink coverage and the latency in the TDD mode, a subband fullduplex (subband non-overlapping fullduplex, SBFD) solution and a single frequency fullduplex (single frequency fullduplex, SFFD) solution are proposed.

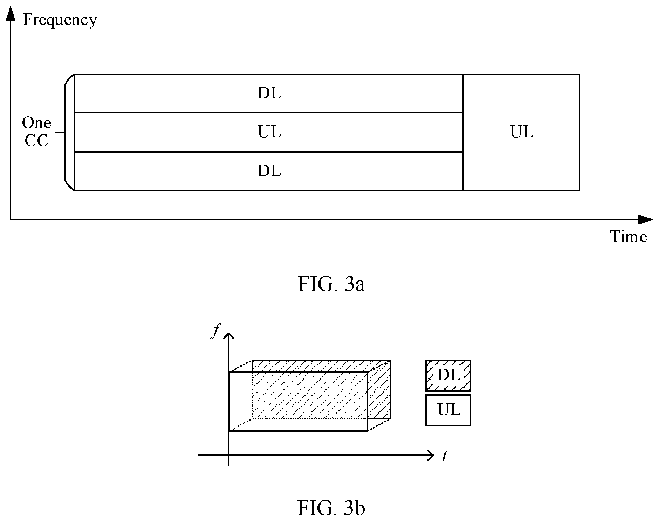

In the SBFD solution, one component carrier (component carrier, CC) may be divided into a plurality of subbands, and transmission directions (uplink or downlink) of different subbands may be different. A typical SBFD solution may be shown in FIG. 3a. One CC is divided into three subbands, a middle subband is used for uplink, and an upper subband and a lower subband are used for downlink.

In the SFFD solution, one time domain symbol may be simultaneously used for the uplink and the downlink. In other words, a network device may implement simultaneously transmitting and receiving on one time domain symbol on an entire CC. For example, as shown in FIG. 3b, a same time domain resource and a same frequency domain resource may be used for uplink and downlink.

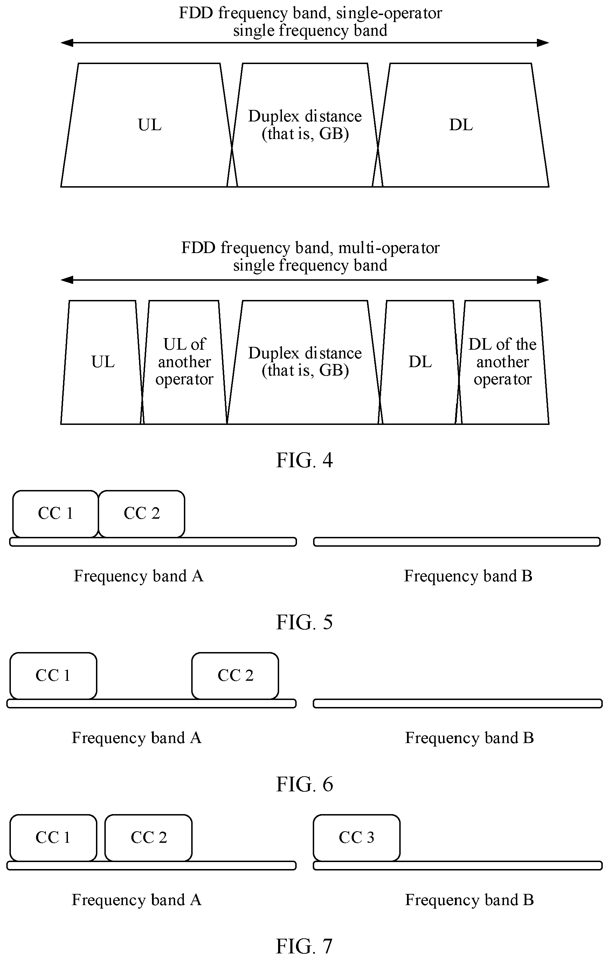

In an FDD mode, there is a guard band (guard band, GB) between the UL and the DL. Generally, the GB is not used for uplink transmission or downlink transmission. In addition, for example, as shown in FIG. 4, a frequency band (referred to as an FDD frequency band) in which an FDD mode operates may be classified into a single-operator single frequency band and a multi-operator single frequency band. The single-operator single frequency band means that only one operator exists on one FDD frequency band, in other words, one FDD frequency band is used for only one operator. The multi-operator single frequency band means that a plurality of operators exist on one FDD frequency band, in other words, one FDD frequency band is used for a plurality of operators.

Usually, frequency domain ranges and duplex modes of different frequency bands may be defined in a protocol. For example, frequency domain ranges of some frequency bands that are in an NR frequency range (frequency range, FR) 1 and that are defined in the protocol are shown in Table 1.

**Table 1**

| Frequency band | UL frequency band/ *F_{UL_low} - F_{UL_high}* | DL frequency band/ *F_{DL_low}* - *F_{DL_high}* | Duplex mode |
|---|---|---|---|
| n1 | 1920 MHz-1980 MHz | 2110 MHz-2170 MHz | FDD |
| n2 | 1850 MHz-1910 MHz | 1930 MHz-1990 MHz | FDD |
| n3 | 1710 MHz-1785 MHz | 1805 MHz-1880 MHz | FDD |
| n5 | 824 MHz-849 MHz | 869 MHz-894 MHz | FDD |
| n7 | 2500 MHz-2570 MHz | 2620 MHz-2690 MHz | FDD |
| n8 | 880 MHz-915 MHz | 925 MHz-960 MHz | FDD |
| n12 | 699 MHz-716 MHz | 729 MHz-746 MHz | FDD |
| n14 | 788 MHz-798 MHz | 758 MHz-768 MHz | FDD |
| n18 | 815 MHz-830 MHz | 860 MHz-875 MHz | FDD |
| n20 | 832 MHz-862 MHz | 791 MHz-821 MHz | FDD |
| n25 | 1850 MHz-1915 MHz | 1930 MHz-1995 MHz | FDD |
| n26 | 814 MHz-849 MHz | 859 MHz-894 MHz | FDD |
| n28 | 703 MHz-748 MHz | 758 MHz-803 MHz | FDD |
| n29 | N/A | 717 MHz-728 MHz | SDL |
| n30³ | 2305 MHz-2315 MHz | 2350 MHz-2360 MHz | FDD |
| n34 | 2010 MHz-2025 MHz | 2010 MHz-2025 MHz | TDD |
| n38¹⁰ | 2570 MHz-2620 MHz | 2570 MHz-2620 MHz | TDD |
| n39 | 1880 MHz-1920 MHz | 1880 MHz-1920 MHz | TDD |
| n40 | 2300 MHz-2400 MHz | 2300 MHz-2400 MHz | TDD |
| n41 | 2496 MHz-2690 MHz | 2496 MHz-2690 MHz | TDD |

In Table 1, MHz indicates megahertz (megahertz, MHz). The SDL indicates supplementary downlink (supplementary downlink, SDL). N/A indicates "unavailable" or "nonexistent".

### 2. Carrier aggregation (carrier aggregation, CA)

In a wireless communication system, an uplink peak rate or a downlink peak rate of a terminal device is closely related to a communication bandwidth that can be obtained by the terminal device. A larger communication bandwidth that can be obtained by the terminal device indicates a higher uplink peak rate or a higher downlink peak rate of the terminal device. In a 5G NR system, a maximum bandwidth of a cell in a low frequency band may reach 100 MHz, and a maximum bandwidth of a cell in a high frequency band may reach 400 MHz.

However, a peak rate that a single cell can reach may not reach a peak rate in an enhanced mobile broadband (enhanced mobile broadband, eMBB) scenario. Therefore, to increase the peak rate of the terminal device to meet a requirement in the eMBB scenario, a solution idea is that communication bandwidths of a plurality of cells are aggregated and then provided for the terminal device. This is also an idea of the CA.

In a CA scenario, a carrier corresponds to a cell. For example, that the terminal device accesses a carrier may be understood as that the terminal device accesses a cell. A communication bandwidth of a cell is a bandwidth of a carrier corresponding to the cell. A carrier of each aggregated cell in the CA may be referred to as a component carrier (component carrier, CC). After carriers of a plurality of cells are aggregated, the communication bandwidth that can be obtained by the terminal device may be a sum of bandwidths of the plurality of carriers, and the peak rate is increased.

Based on frequency bands to which the aggregated CCs belong and depending on whether the CCs are contiguous in frequency domain, the CA can be classified into intra-band contiguous carrier aggregation, intra-band non-contiguous carrier aggregation, and inter-band carrier aggregation.

Intra-band contiguous carrier aggregation: A plurality of aggregated CCs belong to a same frequency band, and the plurality of CCs are contiguous in frequency domain. For example, as shown in FIG. 5, both a CC 1 and a CC 2 belong to a frequency band A, and the CC 1 and the CC 2 are contiguous in frequency domain.

Intra-band non-contiguous carrier aggregation: A plurality of aggregated CCs belong to a same frequency band, but at least two CCs are non-contiguous in frequency domain. For example, as shown in FIG. 6, both a CC 1 and a CC 2 belong to a frequency band A, but the CC 1 and the CC 2 are non-contiguous in frequency domain.

Inter-band carrier aggregation: A plurality of aggregated CCs belong to different frequency bands. For example, as shown in FIG. 7, a CC 1 and a CC 2 belong to a frequency band A, and a CC 3 belongs to a frequency band B. In this case, the CC 1 (or the CC 2) and the CC 3 belong to different frequency bands.

In an inter-band carrier aggregation scenario, the terminal device may report capability information, to indicate capabilities of simultaneously transmitting and receiving of the terminal device on different frequency bands. For example, the terminal device may configure the following parameters in a BandCombination information element.

A band list (bandList) indicates an aggregated frequency band in carrier aggregation, and specifically, may include a frequency band index, for example, may include n1, n3, and n5.

A CA-related parameter (ca-parametersNR) may include a parameter simultaneousRxTxInterBandCA or a parameter simultaneousRxTxInterBandCAPerBandPair.

When the parameter simultaneousRxTxInterBandCA is configured, it indicates that the terminal device supports simultaneously transmitting and receiving on a frequency band pair (pair) including any two frequency bands in the band list. An example in which the band list includes n1, n3, and n5 is used. When the parameter simultaneousRxTxInterBandCA is configured, it indicates that the frequency band pair on which the terminal device supports the simultaneously transmitting and receiving includes: a frequency band pair 1: n1 and n3, a frequency band pair 2: n1 and n5, and a frequency band pair 3: n3 and n5.

When the terminal device supports the simultaneously transmitting and receiving only on a part of frequency band pairs, the parameter simultaneousRxTxInterBandCAPerBandPair may be configured. The parameter may indicate the frequency band pair on which the terminal device supports the simultaneously transmitting and receiving.

An example in which the band list includes n1, n3, and n5, and indexes of the frequency bands n1, n3, and n5 are respectively 0, 1, and 2 is used. The parameter simultaneousRxTxInterBandCAPerBandPair may occupy three bits, and a value of the three bits may indicate the frequency band pair on which the terminal device supports the simultaneously transmitting and receiving. For example, when a value of the parameter simultaneousRxTxInterBandCAPerBandPair is 110, it indicates that the terminal device supports the simultaneously transmitting and receiving on n1 and n3, supports the simultaneously transmitting and receiving on n1 and n5, but does not support the simultaneously transmitting and receiving on n3 and n5.

It may be understood that when the parameter simultaneousRxTxInterBandCA is configured, the parameter simultaneousRxTxInterBandCAPerBandPair may not be configured.

If the terminal device does not support the simultaneously transmitting and receiving on all frequency band pairs including frequency bands in the band list, neither the parameter simultaneousRxTxInterBandCA nor the parameter simultaneousRxTxInterBandCAPerBandPair is configured. In other words, when the parameter simultaneousRxTxInterBandCA and the parameter simultaneousRxTxInterBandCAPerBandPair are not configured in the CA-related parameter, it indicates that the terminal device does not support the simultaneously transmitting and receiving on any frequency band pair.

In a wireless communication system, capabilities of simultaneously transmitting and receiving of a terminal device on different frequency domain resources are particularly important for processing such as scheduling of a network device. However, currently, a mechanism for reporting a capability of simultaneously transmitting and receiving of the terminal device is not perfect. For example, the capability of simultaneously transmitting and receiving is not reported in an intra-band carrier aggregation scenario. Based on this, this application further provides a solution to report the capability of simultaneously transmitting and receiving of the terminal device in more scenarios.

In addition, a GB exists between an uplink frequency band and a downlink frequency band of an FDD frequency band, and currently, the GB cannot be used for communication. Consequently, a waste of resources is caused. Based on this, a solution is designed in this application, so that the GB can be used for communication, to improve resource utilization. Further, in the solutions of this application, when the GB of the FDD frequency band is used, reporting a capability of simultaneously transmitting and receiving of the terminal device is implemented.

With reference to the accompanying drawings, the following describes in detail methods provided in embodiments of this application by using interaction between a terminal device and a network device as an example.

It may be understood that in embodiments of this application, an execution body may perform a part or all of the steps in embodiments of this application. The steps or operations are merely examples. Embodiments of this application may further include performing other operations or variations of various operations. In addition, the steps may be performed in different sequences presented in embodiments of this application, and not all the operations in embodiments of this application may be performed.

It should be noted that in the following embodiments of this application, names of messages or names of parameters in messages of devices are merely examples, and the messages or the parameters may have other names in specific implementations. This is not specifically limited in embodiments of this application.

To facilitate understanding of the technical solutions in embodiments of this application, the following first briefly describes terms related to this application.

A frequency band may refer to a contiguous frequency domain range. For example, a frequency domain range 1880 MHz-1920 MHz may be referred to as one frequency band. Alternatively, the frequency band may refer to at least two non-contiguous frequency domain ranges. For example, frequency domain ranges 1920 MHz-1980 MHz and 2110 MHz-2170 MHz may be referred to as one frequency band.

A subband (subband, SB) refers to a part or a plurality of parts of a frequency band. For example, one frequency band may be divided into a plurality of subbands.

A CC refers to a part or a plurality of parts of a frequency band from a perspective of a frequency domain range. From a perspective of CA, the CC is a carrier of a cell.

It should be noted that there is no specific inclusion relationship between the CC and the subband. From a perspective of a frequency domain range, one CC and one subband may partially or completely overlap, one CC may include a plurality of subbands, or one subband may include a plurality of CCs. A logical relationship between the CC and the subband is not specifically limited in this application.

A bandwidth part (bandwidth part, BWP) refers to a partial frequency domain range in a transmission bandwidth (or a carrier). From a perspective of a frequency domain range, one CC may include one or more BWPs, and different BWPs may partially overlap or may not overlap at all.

A subband pair indicates two subbands. It should be noted that in this application, the subband pair is for indicating two subbands, and it does not indicate that there is an action of pairing two subbands or forming a CC pair by using two CC subbands.

A CC pair indicates two CCs. It should be noted that in this application, the CC pair is for indicating two CCs, and it does not indicate that there is an action of pairing two CCs or forming the CC pair by using the two CCs.

A BWP pair indicates two BWPs. It should be noted that in this application, the BWP pair is for indicating two BWPs, and it does not indicate that there is an action of pairing two BWPs or forming the BWP pair by using the two BWPs.

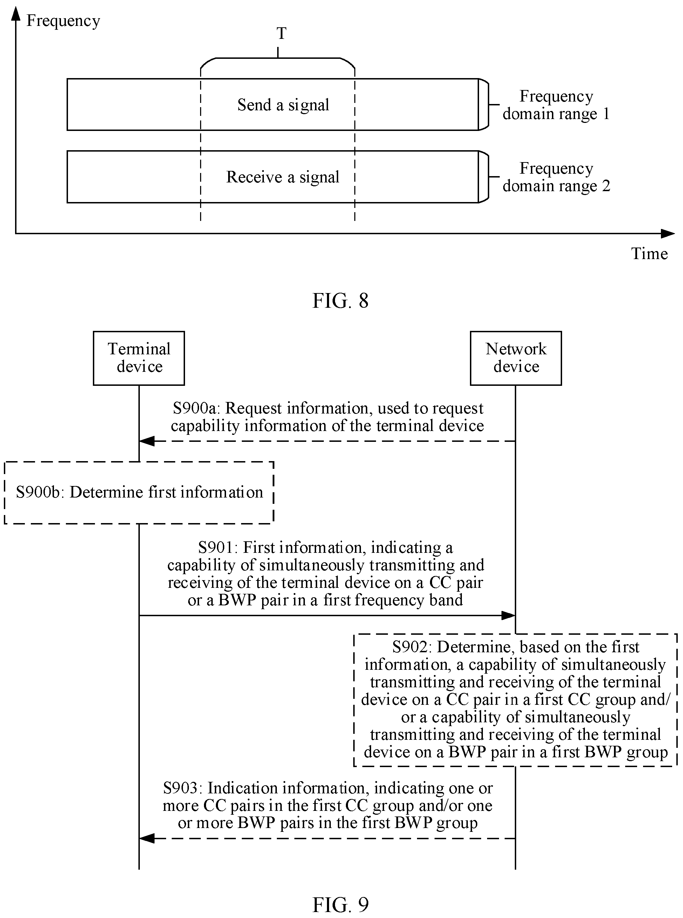

Simultaneously transmitting and receiving means sending a signal in one of two frequency domain ranges while receiving a signal in the other frequency domain range. For example, as shown in FIG. 8, in a time period T, a terminal device may send a signal in a frequency domain range #1, and may simultaneously receive a signal in a frequency domain range #2. When the frequency domain range #1 and the frequency domain range #2 are a same frequency domain range, it indicates that the terminal device supports the simultaneously transmitting and receiving in a same frequency domain range.

FIG. 9 shows a method for reporting a capability of simultaneously transmitting and receiving according to an embodiment of this application. The method for reporting the capability of simultaneously transmitting and receiving includes the following steps.

S901: A terminal device sends first information to a network device. Correspondingly, the network device receives the first information from the terminal device.

The first information indicates a capability of simultaneously transmitting and receiving of the terminal device on a CC pair or a BWP pair in a first frequency band. For example, the first frequency band may be a TDD frequency band.

The simultaneously transmitting and receiving on the CC pair means sending a signal on one CC in the CC pair while receiving a signal on the other CC in the CC pair. The simultaneously transmitting and receiving on the BWP pair means sending a signal on one BWP in the BWP pair while receiving a signal on the other BWP in the BWP pair.

Optionally, the first frequency band may be one frequency band. To be specific, the first information may indicate the capability of simultaneously transmitting and receiving of the terminal device on a CC pair or a BWP in one frequency band (that is, an intra-band). In other words, in the solution provided in this application, the capability of simultaneously transmitting and receiving at a CC pair granularity or a BWP granularity may be reported.

Optionally, the terminal device may actively send the first information to the network device. For example, the terminal device may send the first information to the network device in a process of accessing the network device, or the terminal device may immediately send the first information to the network device after completing access.

Alternatively, the terminal device may send the first information to the network device based on a request of the network device. In this scenario, before step S901, the method may further include the following step S900a.

S900a: The network device sends request information to the terminal device. Correspondingly, the terminal device receives the request information from the network device.

The request information is used to request capability information of the terminal device. In this case, the first information may be understood as response information of the request information.

Optionally, before step S901, the method may further include the following step S900b.

S900b: The terminal device determines the first information. For example, the terminal device may determine the first information based on a capability (for example, a filtering capability or a supported frequency band) of the terminal device.

It should be noted that there is no strict execution sequence between the foregoing steps S900a and S900b. Step S900a may be performed before step S900b; step S900b may be performed before step S900a; or the steps S900a and S900b may be performed simultaneously. This is not specifically limited in this application.

Optionally, after receiving the first information, the network device may perform the following step S902.

S902: Determine, based on the first information, a capability of simultaneously transmitting and receiving of the terminal device on a CC pair in a first CC group and/or a capability of simultaneously transmitting and receiving of the terminal device on a BWP pair in a first BWP group.

The first CC group is a plurality of CCs that are in the first frequency band and that are configured by the network device for the terminal device. The first BWP group includes a BWP in each CC in the first CC group.

For example, it is assumed that the first frequency band includes a CC #1, a CC #2, a CC #3, and a CC #4, and the first CC group may include a plurality of the CC #1, the CC #2, the CC #3, and the CC #4, for example, may include the CC #1, the CC #2, and the CC #3. Correspondingly, the first information may indicate a capability of simultaneously transmitting and receiving of the terminal device on every two CCs in the CC #1, the CC #2, the CC #3, and the CC #4. Therefore, the network device may learn of, based on the first information, the capability of simultaneously transmitting and receiving of the terminal device on the CC pair in the first CC group.

For example, it is assumed that the CC #1 includes a BWP #11 and a BWP #12, the CC #2 includes a BWP #21, the CC 3 includes a BWP #31, and the CC 4 includes a BWP #41. The first BWP group includes the BWP #11, the BWP #12, the BWP #21, and the BWP #31.

Optionally, before step S902, the terminal device may report, to the network device, a frequency band (that is, the first frequency band) supported by the terminal device. After learning of the frequency band supported by the terminal device, the network device may configure a first group of CCs and a BWP in each CC in the first group of CCs for the terminal device.

Optionally, there is no strict execution sequence between reporting, by the terminal device, the frequency band supported by the terminal device and sending, by the terminal device, the first information. The terminal device may first report the frequency band supported by the terminal device and then send the first information; the terminal device may first send the first information and then report the frequency band supported by the terminal device; or the terminal device may simultaneously report the frequency band supported by the terminal device and the first information.

Optionally, after the network device configures the first CC group and the BWP in each CC in the first CC group for the terminal device, the terminal device may also determine the capability of simultaneously transmitting and receiving of the terminal device on the CC pair in the first CC group and/or the capability of simultaneously transmitting and receiving of the terminal device on the BWP pair in the first BWP group.

Optionally, after step S902, the network device may further perform the following step S903.

S903: The network device sends indication information to the terminal device. Correspondingly, the terminal device receives the indication information from the network device.

The indication information indicates one or more CC pairs in the first CC group and/or one or more BWP pairs in the first BWP group. The terminal device has a capability of simultaneously transmitting and receiving on the one or more CC pairs, and the terminal device has a capability of simultaneously transmitting and receiving on the one or more BWP pairs.

It should be noted that that the terminal device has the capability of simultaneously transmitting and receiving on the CC pair may alternatively be understood as that the terminal device supports the simultaneously transmitting and receiving on the CC pair, or the CC pair supports the terminal device in the simultaneously transmitting and receiving, and the three descriptions may be replaced with each other. Similarly, that the terminal device has the capability of simultaneously transmitting and receiving on the BWP pair may alternatively be understood as that the terminal device supports the simultaneously transmitting and receiving on the BWP pair, or the BWP pair supports the terminal device in the simultaneously transmitting and receiving.

Optionally, the one or more CC pairs indicated by the indication information may be a part or all CC pairs that are in the first CC group and that support the terminal device in the simultaneously transmitting and receiving. For example, it is assumed that the CC pair that is in the first CC group and that supports the terminal device in the simultaneously transmitting and receiving includes a CC pair 1: a CC #1 and a CC #2, and a CC pair 2: the CC #1 and a CC #3. The CC pair indicated by the indication information may be the CC pair 1 and/or the CC pair 2. The one or more BWP pairs indicated by the indication information may also be a part or all BWP pairs that are in the first BWP group and that support the terminal device in the simultaneously transmitting and receiving.

Optionally, after sending the indication information to the terminal device, the network device may subsequently schedule the terminal device to perform simultaneously transmitting and receiving on the CC pair or the BWP pair indicated by the indication information.

Based on this solution, the terminal device may indicate the capability of simultaneously transmitting and receiving of the terminal device on the CC pair or the BWP pair in the first frequency band, to report a capability of simultaneously transmitting and receiving at a CC pair granularity or a BWP pair granularity in a frequency band. In other words, in comparison with reporting of a capability of simultaneously transmitting and receiving on a frequency band pair, a capability of simultaneously transmitting and receiving at a finer granularity can be reported, so that the network device can schedule the simultaneously transmitting and receiving at the CC pair granularity or the BWP pair granularity. This improves transmission flexibility.

The foregoing describes an overall procedure of the method that is for reporting the capability of simultaneously transmitting and receiving and that is provided in this application. The following describes the first information. For example, the first information may be implemented in the following three manners.

Manner 1: The first information indicates a minimum frequency domain guard interval used when the terminal device supports simultaneously transmitting and receiving, and the minimum frequency domain guard interval indicates the capability of simultaneously transmitting and receiving of the terminal device on the CC pair or the BWP pair in the first frequency band.

Optionally, the minimum frequency domain guard interval may be a guard interval in a frequency domain guard interval group, and the frequency domain guard interval group includes one or more frequency domain guard intervals. The frequency domain guard interval group may be predefined in a protocol, or may be pre-negotiated by the terminal device and the network device. This is not specifically limited in this application.

Optionally, the first information may include the minimum frequency domain guard interval, in other words, a value of the minimum frequency domain guard interval is carried in the first information. Alternatively, the first information may include an index of the minimum frequency domain guard interval in the frequency domain guard interval group.

In a first possible implementation, for two CCs in the first frequency band, a first CC and a second CC are used as examples. When a highest frequency of the first CC is less than a lowest frequency of the second CC, if a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

In a second possible implementation, for two BWPs that belong to different CCs in the first frequency band, a first BWP in a first CC and a second BWP in a second CC are used as examples. If a frequency domain interval between a highest frequency of the first CC and a lowest frequency of the second CC is greater than or equal to the minimum frequency domain guard interval, the terminal device has a capability of simultaneously transmitting and receiving on the first BWP and the second BWP. Alternatively, if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

In a third possible implementation, for two BWPs that belong to a same CC in the first frequency band, a third BWP and a fourth BWP in a third CC in the first frequency band are used as examples. When a highest frequency of the third BWP is less than a lowest frequency of the fourth BWP, if a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

Optionally, a value (denoted as GB0) of the minimum frequency domain guard interval indicating the capability of simultaneously transmitting and receiving of the terminal device on the CC pair in the first frequency band and a value (GB1) of the minimum frequency domain guard interval indicating the capability of simultaneously transmitting and receiving of the terminal device on the BWP pair in the first frequency band may be the same or different. In other words, the value of the minimum guard interval in the foregoing first possible implementation and the value of the minimum guard interval in the second possible implementation or the third possible implementation may be the same or different. For example, GB1 may be greater than GB0. Certainly, GB1 may alternatively be less than GB0. This is not specifically limited in this application.

Optionally, the minimum frequency domain guard interval may further indicate a capability of simultaneously transmitting and receiving of the terminal device on an inter-band CC pair or BWP pair. For example, the foregoing first possible implementation and the foregoing second possible implementation are also applicable when the first CC and the second CC belong to different frequency bands.

Based on Manner 1, the terminal device reports, to the network device, the minimum frequency domain guard interval used when the simultaneously transmitting and receiving are supported, and the minimum frequency domain guard interval indicates the capability of simultaneously transmitting and receiving of the terminal device on the CC pair or the BWP pair. This can reduce information reported by the terminal device and reduce signaling overheads.

Manner 2: The first information includes a first parameter or a second parameter, or the first information includes neither a first parameter nor a second parameter.

In a first possible implementation, the first parameter indicates that the terminal device has the capability of simultaneously transmitting and receiving on any CC pair in the first frequency band. The second parameter indicates a first CC pair, and the terminal device has a capability of simultaneously transmitting and receiving on the first CC pair. In other words, the second parameter indicates the CC pair that supports the terminal device in the simultaneously transmitting and receiving. The first CC pair may include one or more CC pairs.

Therefore, if the first information includes the first parameter and does not include the second parameter, it indicates that the terminal device has the capability of simultaneously transmitting and receiving on any CC pair in the first frequency band. If the first information includes the second parameter and does not include the first parameter, it indicates that the terminal device has the capability of simultaneously transmitting and receiving on the first CC pair. If the first information includes neither the first parameter nor the second parameter, it indicates that the terminal device has no capability of simultaneously transmitting and receiving on any CC pair in the first frequency band.

For example, in the first possible implementation, the first parameter may be represented as simultaneousRxTxIntraBandCA. When the first information includes a configuration of simultaneousRxTxIntraBandCA=supported, it indicates that the terminal device has the capability of simultaneously transmitting and receiving on any CC pair in the first frequency band. The second parameter may be represented as simultaneousRxTxIntraBandCAPerCCPair.

In a second possible implementation, the first parameter indicates that the terminal device has the capability of simultaneously transmitting and receiving on any BWP pair in the first frequency band. The second parameter indicates a first BWP pair, and the terminal device has a capability of simultaneously transmitting and receiving on the first BWP pair. In other words, the second parameter indicates the BWP pair that supports the terminal device in the simultaneously transmitting and receiving. The first BWP pair may include one or more BWP pairs. The BWP pair in the first frequency band may be two BWPs in a same CC, or may be two BWPs in different CCs. This is not specifically limited in this application.

Therefore, if the first information includes the first parameter, it indicates that the terminal device has the capability of simultaneously transmitting and receiving on any BWP pair in the first frequency band. If the first information includes the second parameter, it indicates that the terminal device has the capability of simultaneously transmitting and receiving on the first BWP pair. If the first information includes neither the first parameter nor the second parameter, it indicates that the terminal device has no capability of simultaneously transmitting and receiving on any BWP pair in the first frequency band.

For example, in the second possible implementation, the first parameter may be represented as simultaneousRxTxIntraBandCABWP. When the first information includes a configuration of simultaneousRxTxIntraBandCABWP=supported, it indicates that the terminal device has the capability of simultaneously transmitting and receiving on any BWP pair in the first frequency band. The second parameter may be represented as simultaneousRxTxIntraBandCAPerBWPPair.

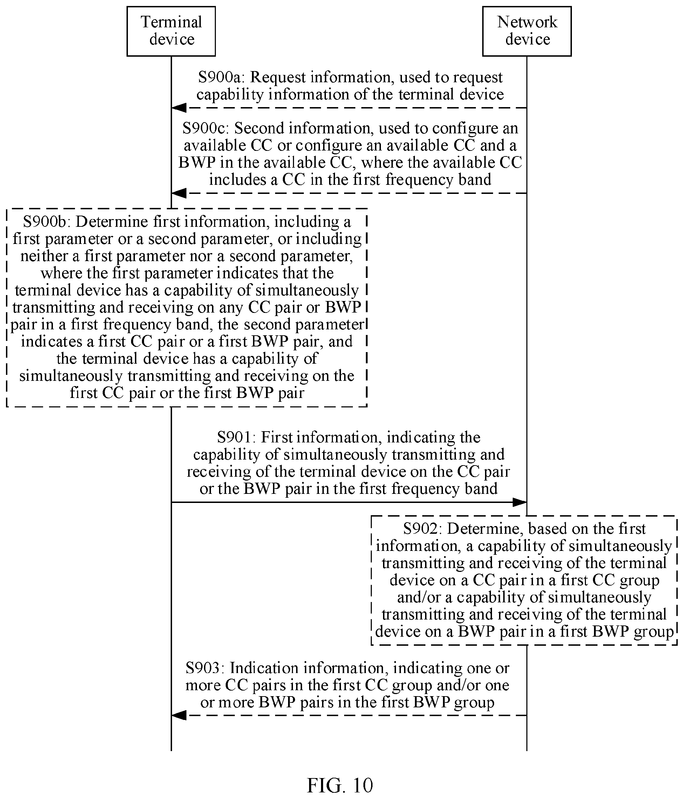

Optionally, in Manner 2, as shown in FIG. 10, before step S901, the following step S900c may be further included.

S900c: The network device sends second information to the terminal device. Correspondingly, the terminal device receives the second information from the network device.

In the foregoing first possible implementation, the second information is used to configure an available CC, and the available CC includes a CC in the first frequency band. In the foregoing second possible implementation, the second information is used to configure an available CC and a BWP in each CC in the available CC.

Optionally, after learning of the available CC based on the second information, the terminal device may determine, based on a capability of the terminal device, a capability of simultaneously transmitting and receiving of the terminal device on each CC pair in the available CC, to determine the first information; and send the first information to the network device. After learning of the available CC and the BWP in each CC based on the second information, the terminal device may determine a capability of simultaneously transmitting and receiving of the terminal device on each BWP pair, to determine the first information; and send the first information to the network device.

Based on Manner 2, the first parameter indicates that the terminal device has the capability of simultaneously transmitting and receiving on any CC pair or BWP pair in the first frequency band. This can reduce information reported by the terminal device and reduce signaling overheads. Alternatively, the second parameter may indicate that the terminal device has the capability of simultaneously transmitting and receiving on the first CC pair or the first BWP pair in the first frequency band. This can explicitly indicate the CC pair or the BWP pair that supports the terminal device in the simultaneously transmitting and receiving, and reduce implementation complexity of the network device.

Manner 3: The first information indicates a capability of simultaneously transmitting and receiving of the terminal device on a subband pair in the first frequency band. The capability of simultaneously transmitting and receiving of the terminal device on the subband pair in the first frequency band indicates the capability of simultaneously transmitting and receiving of the terminal device on the CC pair or the BWP pair in the first frequency band.

Optionally, the first information includes a third parameter or a fourth parameter, or the first information includes neither the third parameter nor the fourth parameter.

The third parameter indicates that the terminal device has the capability of simultaneously transmitting and receiving on any subband pair in the first frequency band. The fourth parameter indicates a first subband pair, and the terminal device has a capability of simultaneously transmitting and receiving on the first subband pair. In other words, the fourth parameter indicates the subband pair that supports the terminal device in the simultaneously transmitting and receiving. The first subband pair may include one or more subband pairs.

Therefore, if the first information includes the third parameter and does not include the fourth parameter, it indicates that the terminal device has the capability of simultaneously transmitting and receiving on any subband pair in the first frequency band. If the first information includes the fourth parameter and does not include the third parameter, it indicates that the terminal device has the capability of simultaneously transmitting and receiving on the first subband pair. If the first information includes neither the third parameter nor the fourth parameter, it indicates that the terminal device has no capability of simultaneously transmitting and receiving on any subband pair in the first frequency band.

For example, in the first possible implementation, the third parameter may be represented as simultaneousRxTxIntraBandCASubband. When the first information includes a configuration of simultaneousRxTxIntraBandCASubband=supported, it indicates that the terminal device has the capability of simultaneously transmitting and receiving on any subband pair in the first frequency band. The fourth parameter may be represented as simultaneousRxTxIntraBandCAPerSubbandPair.

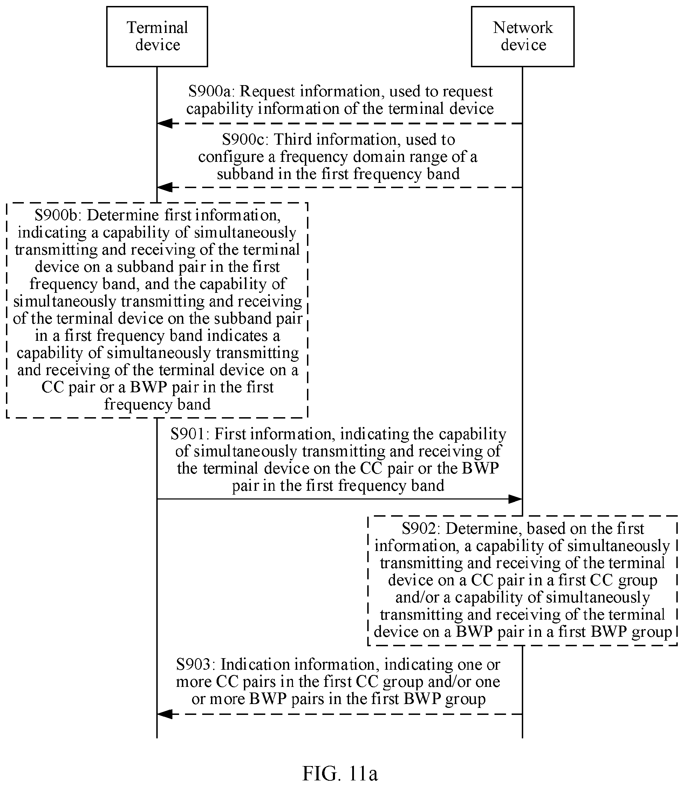

Optionally, in Manner 3, as shown in FIG. 11a, before step S901, the following step S900c may be further included.

S900c: The network device sends third information to the terminal device. Correspondingly, the terminal device receives the third information from the network device.

The third information is used to configure a frequency domain range of a subband in the first frequency band. Optionally, two different subbands in the first frequency band may not overlap, or may partially overlap. This is not specifically limited in this application.

Optionally, after receiving the third information or the frequency domain range of the subband in the first frequency band, the terminal device may determine, based on a capability of the terminal device, a capability of simultaneously transmitting and receiving of the terminal device on each subband pair, to determine the first information; and send the first information to the network device.

For a case in which the capability of simultaneously transmitting and receiving of the terminal device on the subband pair in the first frequency band indicates the capability of simultaneously transmitting and receiving of the terminal device on the CC pair in the first frequency band, there are following implementations.

In a first possible implementation, if the CC pair in the first frequency band belongs to a same subband in the first frequency band, the terminal device has no capability of simultaneously transmitting and receiving on the CC pair.

In a second possible implementation, when frequency domain ranges of any two subbands in the first frequency band do not overlap, for two CCs in the first frequency band, a fourth CC and a fifth CC are used as examples. It is assumed that the fourth CC and each subband in a first subband set in the first frequency band partially or completely overlap, and the fifth CC and each subband in a second subband set in the first frequency band partially or completely overlap. In this scenario, if the terminal device has a capability of simultaneously transmitting and receiving on any subband in the first subband set and any subband in the second subband set, the terminal device has a capability of simultaneously transmitting and receiving on the fourth CC and the fifth CC.

The first subband set and the second subband set include one or more subbands in the first frequency band. That the fourth CC and each subband in the first subband set in the first frequency band partially or completely overlap may alternatively be understood as that the fourth CC belongs to the first subband set. Similarly, it may be also considered that the fifth CC belongs to the second subband set.

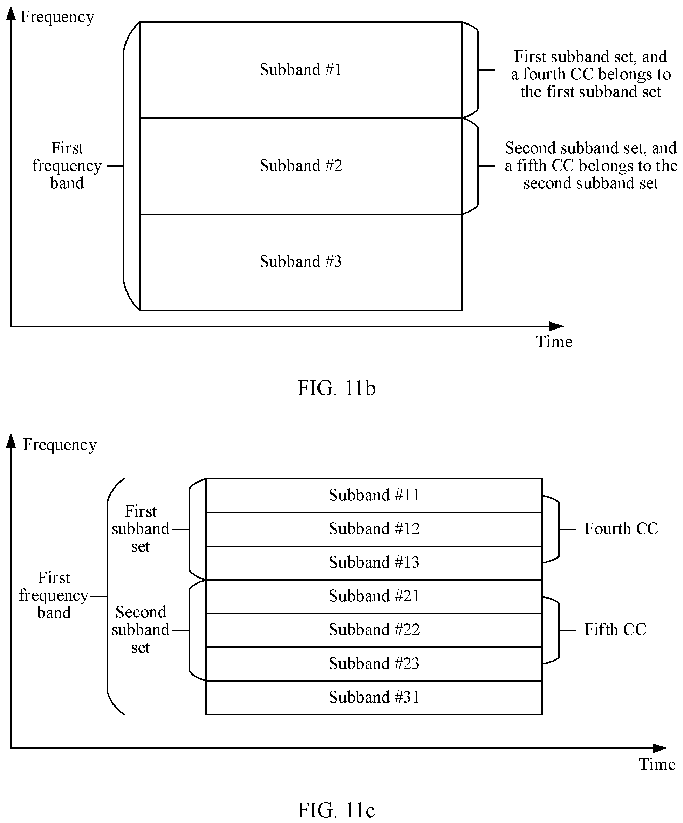

For example, as shown in FIG. 11b, it is assumed that the first frequency band includes a subband #1, a subband #2, and a subband #3, and an example in which the first subband set includes only the subband #1, and the second subband set includes only the subband #2 is used. The second possible implementation is that if the terminal device has a capability of simultaneously transmitting and receiving on the subband #1 and the subband #2, the terminal device has the capability of simultaneously transmitting and receiving on the fourth CC and the fifth CC.

For example, as shown in FIG. 11c, it is assumed that the first frequency band includes a subband #11, a subband #12, a subband #13, a subband #21, a subband #22, a subband #23, and a subband 31, and an example in which the first subband set includes the subband #11, the subband #12, and the subband #13, and the second subband set includes the subband #21, the subband #22, and the subband #23 is used. That the fourth CC and each subband in the first subband set in the first frequency band partially or completely overlap may be understood as that a frequency domain range of the fourth CC includes a part or all of a frequency domain range of the subband #11, a part or all of a frequency domain range of the subband #12, and a part or all of a frequency domain range of the subband #13. In FIG. 11c, an example in which the fourth CC includes the part of the frequency domain range of the subband #11, the part of the frequency domain range of the subband #13, and all the frequency domain range of the subband #12 is used for description. That the fifth CC and each subband in the second subband set in the first frequency band partially or completely overlap may be understood as that a frequency domain range of the fifth CC includes a part or all of a frequency domain range of the subband #21, a part or all of a frequency domain range of the subband #22, and a part or all of a frequency domain range of the subband #23. In FIG. 11c, an example in which the fifth CC includes the part of the frequency domain range of the subband #21, the part of the frequency domain range of the subband #23, and all the frequency domain range of the subband #22 is used for description.

That the terminal device has the capability of simultaneously transmitting and receiving on any subband in the first subband set and any subband in the second subband set may be understood as that the terminal device has capabilities of simultaneously transmitting and receiving on the following subband pairs: the subband #11 and the subband #21, the subband #11 and the subband #22, the subband #11 and the subband #23, the subband #12 and the subband #21, the subband #12 and the subband #22, the subband #12 and the subband #23, the subband #13 and the subband #21, the subband #13 and the subband #22, and the subband #13 and the subband #23.

In a third possible implementation, when frequency domain ranges of at least two subbands in the first frequency band partially or completely overlap, for two CCs in the first frequency band, a fourth CC and a fifth CC are used as examples. It is assumed that the fourth CC belongs to a plurality of first subband sets, and the fifth CC belongs to a plurality of second subband sets. In this scenario, if the terminal device has a capability of simultaneously transmitting and receiving on one first subband set and one second subband set, the terminal device has a capability of simultaneously transmitting and receiving on the fourth CC and the fifth CC.

For example, that the terminal device has the capability of simultaneously transmitting and receiving on the first subband set and the second subband set may be understood as that the terminal device has a capability of simultaneously transmitting and receiving on any subband in the first subband set and any subband in the second subband set.

An implementation in which the capability of simultaneously transmitting and receiving of the terminal device on the subband pair in the first frequency band indicates the capability of simultaneously transmitting and receiving of the terminal device on the BWP pair in the first frequency band is similar to an implementation in which the capability of simultaneously transmitting and receiving of the terminal device on the subband pair in the first frequency band indicates the capability of simultaneously transmitting and receiving of the terminal device on the CC pair in the first frequency band. The CC may be replaced with the BWP for understanding. Details are not described herein again.

Alternatively, an implementation in which the capability of simultaneously transmitting and receiving of the terminal device on the subband pair in the first frequency band indicates the capability of simultaneously transmitting and receiving of the terminal device on the BWP pair in the first frequency band may be for indicating the capability of simultaneously transmitting and receiving of the terminal device on the CC pair in the first frequency band. Further, the capability of simultaneously transmitting and receiving of the terminal device on the BWP pair is indicated by using a belonging relationship between the CC and the BWP. An example in which the capability of simultaneously transmitting and receiving of the terminal device on the subband pair in the first frequency band indicates that the terminal device has the capability of simultaneously transmitting and receiving on the fourth CC and the fifth CC is used. If the fourth CC includes the BWP #1, and the fifth CC includes the BWP #2, the terminal device has a capability of simultaneously transmitting and receiving on the BWP #1 and the BWP #2.

Alternatively, for a case in which the capability of simultaneously transmitting and receiving of the terminal device on the subband pair in the first frequency band indicates the capability of simultaneously transmitting and receiving of the terminal device on the BWP pair in the first frequency band, the subband pair in the first frequency band needs to be a subband pair in a CC (denoted as a sixth CC) in the first frequency band. In other words, a capability of simultaneously transmitting and receiving of the terminal device on a subband pair in the sixth CC indicates a capability of simultaneously transmitting and receiving of the terminal device on a BWP pair in the sixth CC.

In a possible implementation, if the BWP pair in the sixth CC belongs to a same subband in the sixth CC, the terminal device has no capability of simultaneously transmitting and receiving on the BWP pair.

In a second possible implementation, when frequency domain ranges of different subbands in the sixth CC do not overlap, for two BWPs in the sixth CC, a fifth BWP and a sixth BWP are used as examples. It is assumed that the fifth BWP and each subband in a third subband set in the sixth CC partially or completely overlap, and the sixth BWP and each subband in a fourth subband set in the sixth CC partially or completely overlap. In this scenario, if the terminal device has a capability of simultaneously transmitting and receiving on any subband in the third subband set and any subband in the fourth subband set, the terminal device has a capability of simultaneously transmitting and receiving on the fifth BWP and the sixth BWP.

The third subband set and the fourth subband set include one or more subbands in the sixth CC. That the fifth BWP and each subband in the third subband set in the sixth CC partially or completely overlap may alternatively be understood as that the fifth BWP belongs to the third subband set. Similarly, it may be also considered that the sixth BWP belongs to the fourth subband set. Refer to the related descriptions in the foregoing second possible implementation in which the capability of simultaneously transmitting and receiving on the subband pair in the first frequency band indicates the capability of simultaneously transmitting and receiving on the CC pair. Details are not described herein again.

In a third possible implementation, when frequency domain ranges of at least two subbands in the sixth CC partially or completely overlap, for two BWPs in the sixth CC, a fifth BWP and a sixth BWP are used as examples. It is assumed that the fifth BWP belongs to a plurality of third subband sets, and the sixth BWP belongs to a plurality of fourth subband sets. In this scenario, if the terminal device has a capability of simultaneously transmitting and receiving on one third subband set and one fourth subband set, the terminal device has a capability of simultaneously transmitting and receiving on the fifth BWP and the sixth BWP. For descriptions of a capability of simultaneously transmitting and receiving of the terminal device on the two subband sets, refer to the foregoing related descriptions. Details are not described herein again.

Based on Manner 3, the capability of simultaneously transmitting and receiving of the terminal device on the subband pair may indicate the capability of simultaneously transmitting and receiving of the terminal device on the CC pair or the BWP pair, so that the capability of simultaneously transmitting and receiving on the CC pair is reported in a scenario in which a frequency band is divided into subbands, and the capability of simultaneously transmitting and receiving on the BWP pair is reported in a scenario in which the CC is divided into subbands.

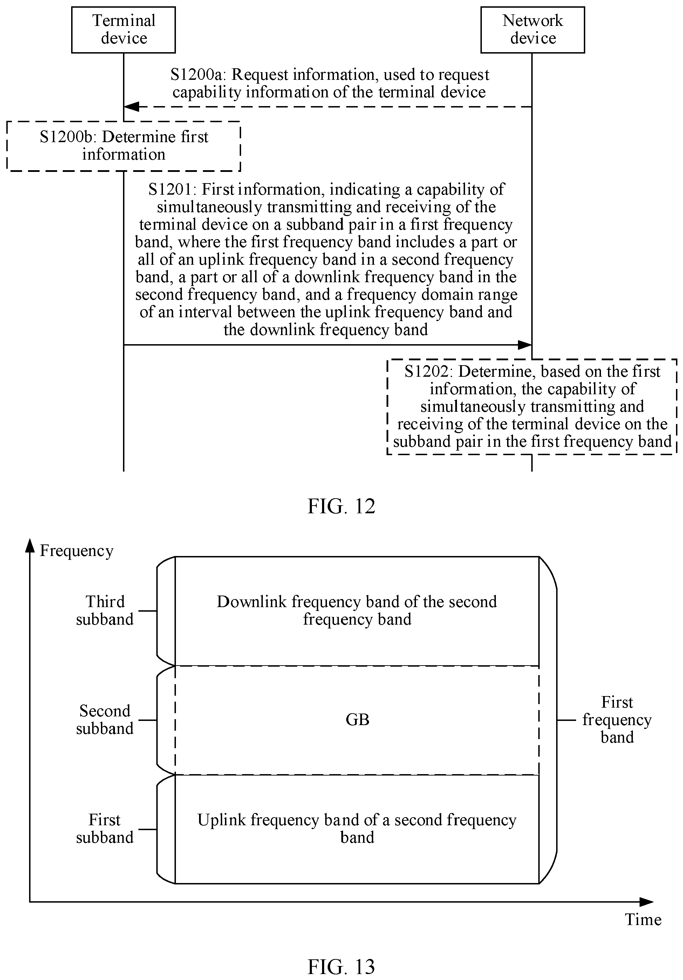

The foregoing describes reporting of the capability of simultaneously transmitting and receiving of the terminal device on the CC pair or the BWP pair. The following describes use of a GB in an FDD frequency band, and a method for reporting a capability of simultaneously transmitting and receiving of a terminal device when the GB is used in this application. As shown in FIG. 12, the method may include the following steps.

S1201: The terminal device sends first information to a network device. Correspondingly, the network device receives the first information from the terminal device.

The first information indicates a capability of simultaneously transmitting and receiving of the terminal device on a subband pair in a first frequency band. The simultaneously transmitting and receiving on the subband pair means sending a signal on one subband in the subband pair while receiving a signal on the other subband in the subband pair.

The first frequency band includes a first subband, a second subband, and a third subband. The first subband includes a part or all of an uplink frequency band of a second frequency band. The second subband includes a part or all of a downlink frequency band of the second frequency band. The third subband includes a frequency domain range of an interval between the uplink frequency band of the second frequency band and the downlink frequency band of the second frequency band.

In other words, the second frequency band is an FDD frequency band. The first frequency band includes a part or all of an uplink frequency band of the FDD frequency band, a part or all of a downlink frequency band of the FDD frequency band, and a frequency domain range (that is, a GB) of an interval between the uplink frequency band and the downlink frequency band of the FDD frequency band.

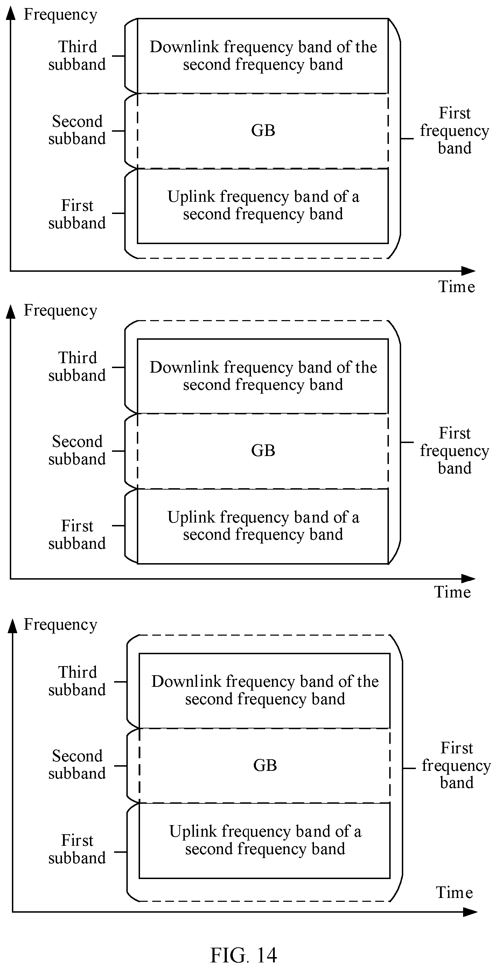

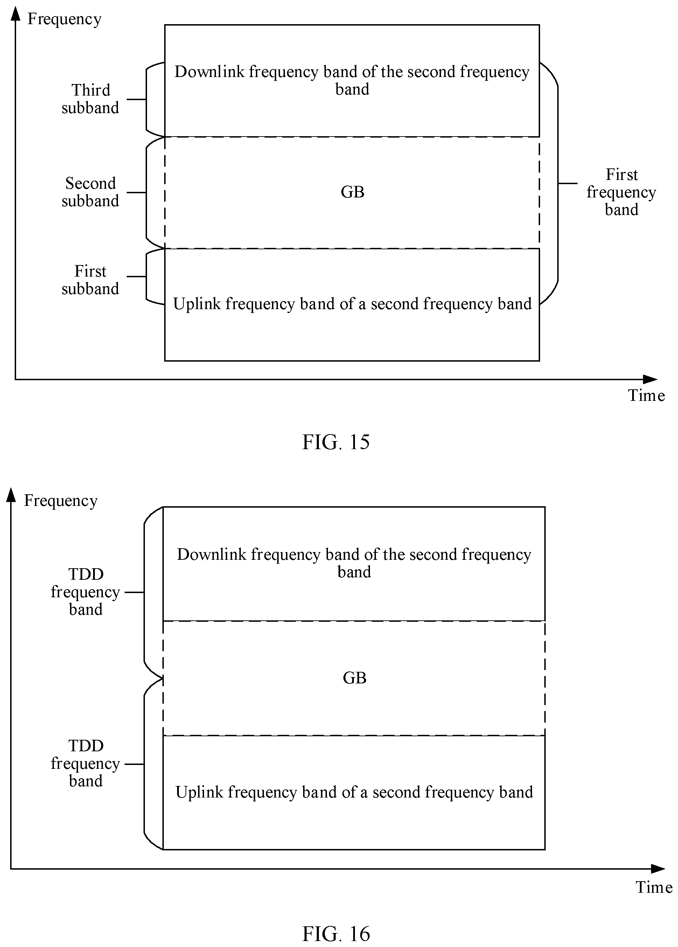

For example, as shown in FIG. 13, the first frequency band includes all the uplink frequency band and all the downlink frequency band of the FDD frequency band, and the frequency domain range of the interval between the uplink frequency band and the downlink frequency band of the FDD frequency band. Further, as shown in FIG. 14, a highest frequency of the first frequency band may be greater than or equal to a highest frequency of the second frequency band, and/or a lowest frequency of the first frequency band may be less than or equal to a lowest frequency of the second frequency band. Alternatively, as shown in FIG. 15, the first frequency band includes the part of the uplink frequency band and the part of the downlink frequency band of the FDD frequency band, and the frequency domain range of the interval between the uplink frequency band and the downlink frequency band of the FDD frequency band.

It should be noted that FIG. 13, FIG. 14, and FIG. 15 are merely some example descriptions of a frequency domain range relationship between the first frequency band and the second frequency band. During actual implementation, there may be another correspondence. This is not specifically limited in this application.

Optionally, the second frequency band may be an FDD frequency band used for a single operator, that is, a single-operator single frequency band; or may be an FDD frequency band used for multiple operators, that is, a multi-operator single frequency band. This is not specifically limited in this application.

Optionally, an uplink frequency band of the first frequency band and a downlink frequency band of the first frequency band completely overlap, in other words, the first frequency band is a TDD frequency band. In other words, the TDD frequency band defined in this application may include the part or all of the uplink frequency band of the FDD frequency band, the part or all of the downlink frequency band of the FDD frequency band, and the frequency domain range of the interval between the uplink frequency band and the downlink frequency band of the FDD frequency band, and division into subbands may be performed in the TDD frequency band.

Optionally, the first information may indicate that the terminal device has a capability of simultaneously transmitting and receiving on a first subband pair, but has no capability of simultaneously transmitting and receiving on a second subband pair or a third subband pair. The first subband pair includes the first subband and the second subband, the second subband pair includes the first subband and the third subband, and the third subband pair includes the second subband and the third subband.

For example, the first information may include an index of the first frequency band and flag information, and the flag information may indicate that the terminal device has the capability of simultaneously transmitting and receiving on the first subband pair, but has no capability of simultaneously transmitting and receiving on the second subband pair or the third subband pair. For example, the flag information may be represented by a flag, and the terminal device may set the flag to simultaneousRxTx, to indicate capabilities of simultaneously transmitting and receiving of the terminal device on the first subband pair, the second subband pair, and the third subband pair.

Based on this solution, because the first subband includes the part of or all of the uplink frequency band of the FDD frequency band, the second subband includes the part or all of the downlink frequency band of the FDD frequency band, and there is the frequency domain guard interval between the first subband and the second subband, mutual interference between transmitting and receiving can be reduced when the terminal device performs simultaneously transmitting and receiving on the first subband and the second subband. In addition, although the terminal device has no capability of simultaneously transmitting and receiving on the second subband pair or the third subband pair, because the first frequency band includes the frequency domain guard interval (that is, the third subband) of the FDD frequency band, the network device may schedule the terminal device to perform uplink transmission on the first subband and the third subband, or may schedule the terminal device to perform uplink transmission on the entire first frequency band. This increases an uplink transmission bandwidth and an uplink data rate.

Optionally, the terminal device may actively send the first information to the network device, or the terminal device may send the first information to the network device based on a request of the network device. In this scenario, before step S1201, the method may further include step S1200a: The network device sends request information to the terminal device. Correspondingly, the terminal device receives the request information from the network device. Refer to the related descriptions in step S901. Details are not described herein again.

Optionally, before step S1201, the method may further include step S1200b: The terminal device determines the first information. Refer to the related descriptions in step S900b. Details are not described herein again.

Optionally, after receiving the first information, the network device may perform step S1202: The network device determines, based on the first information, the capability of simultaneously transmitting and receiving of the terminal device on the subband pair in the first frequency band. Then, the network device may schedule uplink transmission and downlink transmission of the terminal device based on the capability of simultaneously transmitting and receiving of the terminal device on the subband pair in the first frequency band.

Based on the foregoing solution, in this application, the part or all of the uplink frequency band and the part or all of the downlink frequency band of the FDD frequency band, and the guard interval between the uplink frequency band and the downlink frequency band of the FDD frequency band are redefined as the first frequency band, so that the network device can schedule the terminal device to perform data transmission in the first frequency band. This fully utilizes the guard interval and improves resource utilization. In addition, the terminal device may report the capability of simultaneously transmitting and receiving of the terminal device on the subband pair in the first frequency band, so that the network device can perform proper scheduling based on the capability of simultaneously transmitting and receiving of the terminal device. This reduces interference between the uplink transmission and the downlink transmission and improves communication efficiency.

In the method shown in FIG. 12, the terminal device reports the first information, so that the network device learns of the capability of simultaneously transmitting and receiving of the terminal device on the subband pair in the first frequency band. In addition, the terminal device may alternatively not report the first information, and it may be considered by default or agreed that when supporting the first frequency band, the terminal device has the capability of simultaneously transmitting and receiving on the first subband pair, but has no capability of simultaneously transmitting and receiving on the second subband pair or the third subband pair. Therefore, when learning that the terminal supports the first frequency band, the network device may learn of the capability of simultaneously transmitting and receiving of the terminal device on the subband pair in the first frequency band.

Based on this solution, overheads of signaling fed back by the terminal device can be reduced, and signaling exchange between the terminal device and the network device can be reduced, thereby reducing power consumption of the terminal device.

In the foregoing solution, the part or all of the uplink frequency band and the part or all of the downlink frequency band of the FDD frequency band, and the guard interval between the uplink frequency band and the downlink frequency band of the FDD frequency band are redefined as one TDD frequency band. In addition, the part or all of the uplink frequency band and the part or all of the downlink frequency band of the FDD frequency band, and the guard interval between the uplink frequency band and the downlink frequency band of the FDD frequency band may alternatively be defined as a plurality of TDD frequency bands. For example, as shown in FIG. 16, all the uplink frequency band, all the downlink frequency bands, and the guard interval between the uplink frequency band and the downlink frequency band of the FDD frequency band may be redefined as two TDD frequency bands. In this scenario, in each TDD frequency band, division into subbands may be further performed, or division into subbands may not be performed. This is not specifically limited in this application.

Alternatively, the part or all of the uplink frequency band, the part or all of the downlink frequency band, and the guard interval between the uplink frequency band and the downlink frequency band of the FDD frequency band may be defined as a supplementary uplink (supplementary uplink, SUL) frequency band or an SDL.

Optionally, in the foregoing two frequency band definition manners, the terminal device may report whether the terminal device supports a newly defined frequency band, and the like. When the newly defined TDD frequency band is further divided into a plurality of subbands, the terminal device may further report a capability of simultaneously transmitting and receiving of the terminal device on the subband pair.

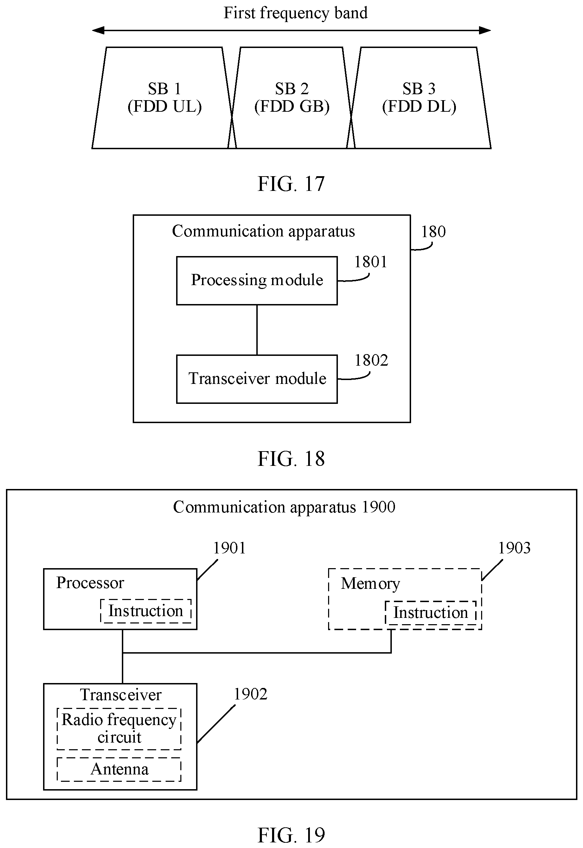

In the foregoing solution, when the part or all of the uplink frequency band and the part or all of the downlink frequency band of the FDD frequency band, and the guard interval between the uplink frequency band and the downlink frequency band of the FDD frequency band are redefined as the first frequency band, a first terminal device reports the capability of simultaneously transmitting and receiving of the terminal device on the subband pair to the network device. In addition, the terminal device may not perform reporting to the network device, and the network device indicates, to the terminal device, a subband pair, a CC pair, or a BWP pair that can be used for simultaneously transmitting and receiving in the first frequency band. The first frequency band shown in FIG. 17 is used as an example.

In a possible implementation, the network device may indicate that simultaneously transmitting and receiving can be performed on the first subband pair (an SB 1 and an SB 3), and simultaneously transmitting and receiving cannot be performed on the second subband pair (an SB 1 and an SB 3) or the third subband pair (an SB 2 and an SB 3).

Optionally, when simultaneously transmitting and receiving can be performed on the first subband pair, simultaneously transmitting and receiving can be performed on a CC in the SB 1 and a CC in the SB 3, and simultaneously transmitting and receiving can be performed on a BWP in the SB 1 and a BWP in the SB 3.

In another possible implementation, the network device may indicate the CC pair on which simultaneously transmitting and receiving can be performed. For example, the network device may indicate that simultaneously transmitting and receiving can be performed on a CC pair including a CC 1 in an SB 1 and a CC 3 in an SB 3.

Optionally, when simultaneously transmitting and receiving can be performed on the CC 1 and the CC 3, simultaneously transmitting and receiving can be performed on a BWP in the CC 1 and a BWP in the CC 3.

In still another possible implementation, the network device may indicate the BWP pair on which simultaneously transmitting and receiving are performed. For example, the network device may indicate that simultaneously transmitting and receiving can be performed on a BWP pair including a BWP 1 in an SB 1 and a BWP 3 in an SB 3.

In yet another possible implementation, the network device may indicate a frequency range in which simultaneously transmitting and receiving are performed. For example, a frequency range 1 in the first frequency band may be a frequency range of the first subband, a frequency range 2 may be a frequency range of the second subband, and the frequency range 2 may be a frequency range of the third subband. In this case, the network device may indicate that simultaneously transmitting and receiving can be performed on the frequency range 1 and a frequency range 3.

Optionally, the frequency range may be indicated by using at least two of an index of a start resource block (resource block) RB of the frequency range, a quantity of RBs occupied by the frequency range, or an index of an end RB of the frequency domain range. Alternatively, the frequency range may be represented by a bitmap (bitmap). One bit in the bitmap may represent one RB or one RB group (RB group, RBG). When a value of a bit is "1" (or "0"), it may indicate that the frequency range includes an RB or an RBG represented by the bit.

Optionally, when simultaneously transmitting and receiving can be performed on the frequency range 1 and the frequency range 3, simultaneously transmitting and receiving can be performed on a CC in the frequency range 1 and a CC in the frequency range 3, and simultaneously transmitting and receiving can be performed on a BWP in the frequency range 1 and a BWP in the frequency range 3.

Optionally, after indicating, to the terminal device, the subband pair, the CC pair, the BWP pair, or the frequency range pair that can be used for the simultaneously transmitting and receiving in the first frequency band, the network device may schedule, on the subband pair, the CC pair, the BWP pair, or the frequency range pair indicated by the network device, the terminal device to perform simultaneously transmitting and receiving.

It may be understood that in the foregoing embodiments, the methods and/or the steps implemented by the network device may alternatively be implemented by a component (for example, a processor, a chip, a chip system, a circuit, a logical module, or software such as a chip or a circuit) that can be used in the network device; and the methods and/or the steps implemented by the terminal device may alternatively be implemented by a component (for example, a processor, a chip, a chip system, a circuit, a logical module, or software such as a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, an apparatus including the foregoing terminal device, or a component that can be used in the terminal device, for example, a chip or a chip system. Alternatively, the communication apparatus may be the network device in the foregoing method embodiments, or an apparatus including the foregoing network device, or a component that can be used in a network device, for example, a chip or a chip system.

It may be understood that to implement the foregoing functions, the communication apparatus includes a corresponding hardware structure and/or a corresponding software module for performing each function. A person skilled in the art should easily be aware that in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The foregoing integrated module may be implemented in a form of hardware, or may be implemented in a form of a software functional module. It should be noted that in embodiments of this application, module division is an example, and is merely a logical function division. During actual implementation, another division manner may be used.

FIG. 18 of a communication apparatus is a diagram of a structure of a communication apparatus 180. The communication apparatus 180 includes a processing module 1801 and a transceiver module 1802. The communication apparatus 180 may be configured to implement a function of the foregoing network device or the foregoing terminal device.

In some embodiments, the communication apparatus 180 may further include a storage module (not shown in FIG. 18), configured to store program instructions and data.

In some embodiments, the transceiver module 1802 may also be referred to as a transceiver unit, configured to implement a sending function and/or receiving function. The transceiver module 1802 may include a transceiver circuit, a transceiver machine, a transceiver, or a communication interface.

In some embodiments, the transceiver module 1802 may include a receiving module and a sending module, respectively configured to perform transmitting and receiving steps performed by the network device or the terminal device in the foregoing method embodiments and/or configured to support another process of the technology described in this specification. The processing module 1801 may be configured to perform processing (for example, determining and generating) steps performed by the network device or the terminal device in the foregoing method embodiments and/or configured to support another process of the technology described in this specification.

When the communication apparatus 180 is configured to implement the function of the foregoing terminal device,
in some embodiments, the transceiver module 1802 is configured to send first information to a network device. The first information indicates a capability of simultaneously transmitting and receiving of a terminal device on a carrier component CC pair or a bandwidth part BWP pair in a first frequency band, where the simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair.

Optionally, the processing module 1801 is configured to determine the first information.

Optionally, the first information indicates a minimum frequency domain guard interval used when the terminal device supports the simultaneously transmitting and receiving, and the minimum frequency domain guard interval indicates the capability of simultaneously transmitting and receiving of the terminal device on the CC pair or the BWP pair in the first frequency band.

Optionally, the first frequency band includes a first CC and a second CC, and a highest frequency of the first CC is less than a lowest frequency of the second CC. If a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

Optionally, the first CC includes a first BWP, and the second CC includes a second BWP. If the frequency domain interval between the highest frequency of the first CC and the lowest frequency of the second CC is greater than or equal to the minimum frequency domain guard interval, the terminal device has a capability of simultaneously transmitting and receiving on the first BWP and the second BWP. Alternatively, if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

Optionally, the first frequency band includes a third CC, the third CC includes a third BWP and a fourth BWP, and a highest frequency of the third BWP is less than a lowest frequency of the fourth BWP. If a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

Optionally, the first information includes the minimum frequency domain guard interval. Alternatively, the minimum frequency domain guard interval is a guard interval in a frequency domain guard interval group, the frequency domain guard interval group includes one or more frequency domain guard intervals, and the first information includes an index of the minimum frequency domain guard interval in the frequency domain guard interval group.

Optionally, the first information includes a first parameter. The first parameter indicates that the terminal device has the capability of simultaneously transmitting and receiving on any CC pair in the first frequency band. Alternatively, the first information includes a first parameter, and the first parameter indicates that the terminal device has the capability of simultaneously transmitting and receiving on any BWP pair in the first frequency band.

Optionally, the first information includes a second parameter, the second parameter indicates a first CC pair, and the terminal device has a capability of simultaneously transmitting and receiving on the first CC pair. Alternatively, the first information includes a second parameter, the second parameter indicates a first BWP pair, and the terminal device has a capability of simultaneously transmitting and receiving on the first BWP pair.

Optionally, if the first information includes neither a first parameter nor a second parameter, the terminal device has no capability of simultaneously transmitting and receiving on any CC pair or any BWP pair in the first frequency band. The first parameter indicates that the terminal device has the capability of simultaneously transmitting and receiving on any CC pair or BWP pair in the first frequency band, the second parameter indicates a first CC pair or a first BWP pair, and the terminal device has a capability of simultaneously transmitting and receiving on the first CC pair or the first BWP pair.

Optionally, the transceiver module 1802 is further configured to receive second information from the network device, where the second information is used to configure an available CC, and the available CC includes a CC in the first frequency band.

Optionally, the first information indicates a capability of simultaneously transmitting and receiving of the terminal device on a subband pair in the first frequency band, and the capability of simultaneously transmitting and receiving of the terminal device on the subband pair in the first frequency band indicates the capability of simultaneously transmitting and receiving of the terminal device on the CC pair or the BWP pair in the first frequency band.

Optionally, the first information includes a third parameter, and the third parameter indicates that the terminal device has a capability of simultaneously transmitting and receiving on any subband pair in the first frequency band.

Optionally, the first information includes a fourth parameter, the fourth parameter indicates a first subband pair, and the terminal device has a capability of simultaneously transmitting and receiving on the first subband pair.

Optionally, if the first information includes neither a third parameter nor a fourth parameter, the terminal device has no capability of simultaneously transmitting and receiving on any subband pair in the first frequency band. The third parameter indicates that the terminal device has the capability of simultaneously transmitting and receiving on any subband pair in the first frequency band, the fourth parameter indicates a first subband pair, and the terminal device has a capability of simultaneously transmitting and receiving on the first subband pair.

Optionally, if the CC pair or the BWP pair in the first frequency band belongs to a same subband in the first frequency band, the terminal device has no capability of simultaneously transmitting and receiving on the CC pair or the BWP pair.

Optionally, different subbands in the first frequency band do not overlap. The first frequency band includes a fourth CC and a fifth CC. The fourth CC and each subband in a first subband set in the first frequency band partially or completely overlap, and the fifth CC each subband in a second subband set in the first frequency band partially or completely overlap. The first subband set and the second subband set include one or more subbands in the first frequency band. If the terminal device has a capability of simultaneously transmitting and receiving on any subband in the first subband set and any subband in the second subband set, the terminal device has a capability of simultaneously transmitting and receiving on the fourth CC and the fifth CC.

Optionally, the subband pair in the first frequency band is a subband pair in a sixth CC in the first frequency band.

Optionally, if a BWP pair in the sixth CC belongs to a same subband in the sixth CC, the terminal device has no capability of simultaneously transmitting and receiving on the BWP pair.

Optionally, different subbands in the sixth CC do not overlap. The sixth CC includes a fifth BWP and a sixth BWP. The fifth BWP and each subband in a third subband set in the sixth CC partially or completely overlap, and the sixth BWP and each subband in a fourth subband set in the sixth CC partially or completely overlap. The third subband set and the fourth subband set include one or more subbands in the sixth CC. If the terminal device has a capability of simultaneously transmitting and receiving on any subband in the third subband set and any subband in the fourth subband set, the terminal device has a capability of simultaneously transmitting and receiving on the fifth BWP and the sixth BWP.

Optionally, the transceiver module 1802 is further configured to receive third information from the network device, where the third information is used to configure a frequency domain range of a subband in the first frequency band.

In some other embodiments, the transceiver module 1802 is configured to send first information to a network device, where the first information indicates a capability of simultaneously transmitting and receiving of the terminal device on a subband pair in a first frequency band, and the simultaneously transmitting and receiving means sending a signal on one subband in the subband pair while receiving a signal on the other subband in the subband pair. The first frequency band includes a first subband, a second subband, and a third subband, the first subband includes a part or all of an uplink frequency band of a second frequency band, the second subband includes a part or all of a downlink frequency band of the second frequency band, and the third subband includes a frequency domain range of an interval between the uplink frequency band of the second frequency band and the downlink frequency band of the second frequency band.

Optionally, an uplink frequency band of the first frequency band and a downlink frequency band of the first frequency band completely overlap.

Optionally, the first information indicates that the terminal device has a capability of simultaneously transmitting and receiving on a first subband pair, but has no capability of simultaneously transmitting and receiving on a second subband pair or a third subband pair. The first subband pair includes the first subband and the second subband, the second subband pair includes the first subband and the third subband, and the third subband pair includes the second subband and the third subband.

Optionally, the first information includes an index of the first frequency band and flag information, and the flag information indicates that the terminal device has the capability of simultaneously transmitting and receiving on the first subband pair, but has no capability of simultaneously transmitting and receiving on the second subband pair or the third subband pair.

Optionally, the processing module 1801 is configured to determine the first information.

When the communication apparatus 180 is configured to implement the function of the foregoing network device,
in some embodiments, the transceiver module 1802 is configured to receive first information from a terminal device. The first information indicates a capability of simultaneously transmitting and receiving of a terminal device on a carrier component CC pair or a bandwidth part BWP pair in a first frequency band, where the simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair.

Optionally, the processing module 1801 is configured to determine, based on the first information, a capability of simultaneously transmitting and receiving of the terminal device on a CC pair in a first CC group and/or a capability of simultaneously transmitting and receiving of the terminal device on a BWP pair in a first BWP group.

Optionally, the transceiver module 1802 is further configured to send indication information to the network device, where the indication information indicates one or more CC pairs in the first CC group and/or one or more BWP pairs in the first BWP group.

Optionally, the first information indicates a minimum frequency domain guard interval used when the terminal device supports the simultaneously transmitting and receiving, and the minimum frequency domain guard interval indicates the capability of simultaneously transmitting and receiving of the terminal device on the CC pair or the BWP pair in the first frequency band.

Optionally, the first frequency band includes a first CC and a second CC, and a highest frequency of the first CC is less than a lowest frequency of the second CC. If a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

Optionally, the first CC includes a first BWP, and the second CC includes a second BWP. If the frequency domain interval between the highest frequency of the first CC and the lowest frequency of the second CC is greater than or equal to the minimum frequency domain guard interval, the terminal device has a capability of simultaneously transmitting and receiving on the first BWP and the second BWP. Alternatively, if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

Optionally, the first frequency band includes a third CC, the third CC includes a third BWP and a fourth BWP, and a highest frequency of the third BWP is less than a lowest frequency of the fourth BWP. If a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

Optionally, the first information includes the minimum frequency domain guard interval. Alternatively, the minimum frequency domain guard interval is a guard interval in a frequency domain guard interval group, the frequency domain guard interval group includes one or more frequency domain guard intervals, and the first information includes an index of the minimum frequency domain guard interval in the frequency domain guard interval group.

Optionally, the first information includes a first parameter, and the first parameter indicates that the terminal device has the capability of simultaneously transmitting and receiving on any CC pair in the first frequency band. Alternatively, the first information includes a first parameter, and the first parameter indicates that the terminal device has the capability of simultaneously transmitting and receiving on any BWP pair in the first frequency band.

Optionally, the first information includes a second parameter, the second parameter indicates a first CC pair, and the terminal device has a capability of simultaneously transmitting and receiving on the first CC pair. Alternatively, the first information includes a second parameter, the second parameter indicates a first BWP pair, and the terminal device has a capability of simultaneously transmitting and receiving on the first BWP pair.

Optionally, if the first information includes neither a first parameter nor a second parameter, the terminal device has no capability of simultaneously transmitting and receiving on any CC pair or any BWP pair in the first frequency band. The first parameter indicates that the terminal device has the capability of simultaneously transmitting and receiving on any CC pair or BWP pair in the first frequency band, the second parameter indicates a first CC pair or a first BWP pair, and the terminal device has a capability of simultaneously transmitting and receiving on the first CC pair or the first BWP pair.

Optionally, the transceiver module 1802 is further configured to send second information to the terminal device, where the second information is used to configure an available CC, and the available CC includes a CC in the first frequency band.

Optionally, the first information indicates a capability of simultaneously transmitting and receiving of the terminal device on a subband pair in the first frequency band, and the capability of simultaneously transmitting and receiving of the terminal device on the subband pair in the first frequency band indicates the capability of simultaneously transmitting and receiving of the terminal device on the CC pair or the BWP pair in the first frequency band.

Optionally, the first information includes a third parameter, and the third parameter indicates that the terminal device has a capability of simultaneously transmitting and receiving on any subband pair in the first frequency band.

Optionally, the first information includes a fourth parameter, the fourth parameter indicates a first subband pair, and the terminal device has a capability of simultaneously transmitting and receiving on the first subband pair.

Optionally, if the first information includes neither a third parameter nor a fourth parameter, the terminal device has no capability of simultaneously transmitting and receiving on any subband pair in the first frequency band. The third parameter indicates that the terminal device has the capability of simultaneously transmitting and receiving on any subband pair in the first frequency band, the fourth parameter indicates a first subband pair, and the terminal device has a capability of simultaneously transmitting and receiving on the first subband pair.

Optionally, if the CC pair or the BWP pair in the first frequency band belongs to a same subband in the first frequency band, the terminal device has no capability of simultaneously transmitting and receiving on the CC pair or the BWP pair.

Optionally, different subbands in the first frequency band do not overlap. The first frequency band includes a fourth CC and a fifth CC. The fourth CC and each subband in a first subband set in the first frequency band partially or completely overlap, and the fifth CC each subband in a second subband set in the first frequency band partially or completely overlap. The first subband set and the second subband set include one or more subbands in the first frequency band. If the terminal device has a capability of simultaneously transmitting and receiving on any subband in the first subband set and any subband in the second subband set, the terminal device has a capability of simultaneously transmitting and receiving on the fourth CC and the fifth CC.

Optionally, the subband pair in the first frequency band is a subband pair in a sixth CC in the first frequency band.

Optionally, if a BWP pair in the sixth CC belongs to a same subband in the sixth CC, the terminal device has no capability of simultaneously transmitting and receiving on the BWP pair.

Optionally, different subbands in the sixth CC do not overlap. The sixth CC includes a fifth BWP and a sixth BWP. The fifth BWP and each subband in a third subband set in the sixth CC partially or completely overlap, and the sixth BWP and each subband in a fourth subband set in the sixth CC partially or completely overlap. The third subband set and the fourth subband set include one or more subbands in the sixth CC. If the terminal device has a capability of simultaneously transmitting and receiving on any subband in the third subband set and any subband in the fourth subband set, the terminal device has a capability of simultaneously transmitting and receiving on the fifth BWP and the sixth BWP.

Optionally, the transceiver module 1802 is further configured to send third information to the terminal device, where the third information is used to configure a frequency domain range of a subband in the first frequency band.

In some other embodiments, the transceiver module 1802 is configured to receive first information from a terminal device, where the first information indicates a capability of simultaneously transmitting and receiving of the terminal device on a subband pair in a first frequency band, and the simultaneously transmitting and receiving means sending a signal on one subband in the subband pair while receiving a signal on the other subband in the subband pair. The first frequency band includes a first subband, a second subband, and a third subband, the first subband includes a part or all of an uplink frequency band of a second frequency band, the second subband includes a part or all of a downlink frequency band of the second frequency band, and the third subband includes a frequency domain range of an interval between the uplink frequency band of the second frequency band and the downlink frequency band of the second frequency band.

Optionally, the processing module 1801 is configured to determine, based on the first information, the capability of simultaneously transmitting and receiving of the terminal device on the subband pair in the first frequency band.

Optionally, an uplink frequency band of the first frequency band and a downlink frequency band of the first frequency band completely overlap.

Optionally, the first information indicates that the terminal device has a capability of simultaneously transmitting and receiving on a first subband pair, but has no capability of simultaneously transmitting and receiving on a second subband pair or a third subband pair. The first subband pair includes the first subband and the second subband, the second subband pair includes the first subband and the third subband, and the third subband pair includes the second subband and the third subband.

Optionally, the first information includes an index of the first frequency band and flag information, and the flag information indicates that the terminal device has the capability of simultaneously transmitting and receiving on the first subband pair, but has no capability of simultaneously transmitting and receiving on the second subband pair or the third subband pair.

All related content of the steps in the foregoing method embodiments may be cited in function descriptions of the corresponding functional modules. Details are not described herein again.

In this application, the communication apparatus 180 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 180 in FIG. 18 is a chip or a chip system, a function/implementation process of the transceiver module 1802 may be implemented through an input/output interface (or a communication interface) of the chip or the chip system, and a function/implementation process of the processing module 1801 may be implemented through a processor (or a processing circuit) of the chip or the chip system.

Because the communication apparatus 180 provided in this embodiment may perform the foregoing methods, for technical effects that can be obtained by the communication apparatus 180, refer to the foregoing method embodiments. Details are not described herein again.

In a possible product form, the network device or the terminal device in this embodiment of this application may be further implemented by using one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described throughout this application.

In another possible product form, the network device or the terminal device in this embodiment of this application may be implemented by using a general bus architecture. For ease of description, FIG. 19 is a diagram of a structure of a communication apparatus 1900 according to an embodiment of this application. The communication apparatus 1900 includes a processor 1901 and a transceiver 1902. The communication apparatus 1900 may be a terminal device, or a chip or a chip system in the terminal device. Alternatively, the communication apparatus 1900 may be a network device, or a chip or a module in the network device. FIG. 19 shows only main components of the communication apparatus 1900. In addition to the processor 1901 and the transceiver 1902, the communication apparatus may further include a memory 1903 and an input/output apparatus (not shown in the figure).

Optionally, the processor 1901 is mainly configured to: process a communication protocol and communication data, control an entire communication apparatus, execute a software program, and process data of the software program. The memory 1903 is mainly configured to store the software program and the data. The transceiver 1902 may include a radio frequency circuit and an antenna. The radio frequency circuit is mainly configured to: perform conversion between a baseband signal and a radio frequency signal, and process the radio frequency signal. The antenna is mainly configured to transmit and receive a radio frequency signal in an electromagnetic wave form. The input/output apparatus, such as a touchscreen, a display, or a keyboard, is mainly configured to: receive data input by a user and output data to the user.

Optionally, the processor 1901, the transceiver 1902, and the memory 1903 may be connected through a communication bus.

After the communication apparatus is powered on, the processor 1901 may read the software program in the memory 1903, interpret and execute instructions of the software program, and process the data of the software program. When data needs to be sent in a wireless manner, the processor 1901 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into the baseband signal, and outputs the baseband signal to the processor 1901. The processor 1901 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the foregoing communication apparatus 180 may be in a form of the communication apparatus 1900 shown in FIG. 19.

In an example, a function/implementation process of the processing module 1801 in FIG. 18 may be implemented by the processor 1901 in the communication apparatus 1900 shown in FIG. 19 by invoking computer-executable instructions stored in the memory 1903. A function/implementation process of the transceiver module 1802 in FIG. 18 may be implemented by the transceiver 1902 in the communication apparatus 1900 shown in FIG. 19.

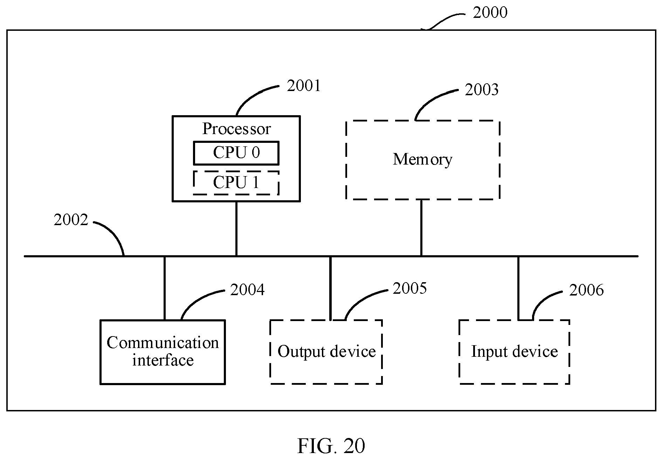

In still another possible product form, the network device or the terminal device in this application may use a composition structure shown in FIG. 20, or include components shown in FIG. 20. FIG. 20 is a diagram of composition of a communication apparatus 2000 according to this application. The communication apparatus 2000 may be a terminal device, or a chip or a system-on-a-chip in the terminal device, or may be a network device, or a module, a chip, or a system-on-a-chip in the network device.

As shown in FIG. 20, the communication apparatus 2000 includes at least one processor 2001 and at least one communication interface (FIG. 20 is described merely by using an example in which one communication interface 2004 and one processor 2001 are included). Optionally, the communication apparatus 2000 may further include a communication bus 2002 and a memory 2003.

The processor 2001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 2001 may alternatively be another apparatus having a processing function, for example, a circuit, a component, or a software module. This is not limited.

The communication bus 2002 is configured to connect different components in the communication apparatus 2000, so that the different components can communicate with each other. The communication bus 2002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 20, but this does not mean that there is only one bus or only one type of bus.

The communication interface 2004 is configured to communicate with another device or a communication network. For example, the communication interface 2004 may be a module, a circuit, a transceiver, or any apparatus that can implement communication. Optionally, the communication interface 2004 may alternatively be an input/output interface located in the processor 2001, and is configured to implement signal input and signal output of the processor.

The memory 2003 may be an apparatus having a storage function, and is configured to store instructions and/or data. The instructions may be a computer program.

For example, the memory 2003 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 2003 may exist independently of the processor 2001, or may be integrated with the processor 2001. The memory 2003 may be located inside the communication apparatus 2000, or may be located outside the communication apparatus 2000. This is not limited. The processor 2001 may be configured to execute the instructions stored in the memory 2003, to implement methods provided in the following embodiments of this application.

In an optional implementation, the communication apparatus 2000 may further include an output device 2005 and an input device 2006. The output device 2005 communicates with the processor 2001, and may display information in a plurality of manners. For example, the output device 2005 may be a liquid crystal display (liquid crystal display, LCD), a light emitting diode (light emitting diode, LED) display device, a cathode ray tube (cathode ray tube, CRT) display device, or a projector (projector). The input device 2006 communicates with the processor 2001, and may receive user input in a plurality of manners. For example, the input device 2006 may be a mouse, a keyboard, a touchscreen device, or a sensing device.

In some embodiments, in hardware implementation, a person skilled in the art may figure out that the foregoing communication apparatus 1800 may be in a form of the communication apparatus 2000 shown in FIG. 20.

In an example, a function/implementation process of the processing module 1801 in FIG. 18 may be implemented by the processor 2001 in the communication apparatus 2000 shown in FIG. 20 by invoking computer-executable instructions stored in the memory 2003. A function/implementation process of the transceiver module 1802 in FIG. 18 may be implemented by the communication interface 2004 in the communication apparatus 2000 shown in FIG. 20.

It should be noted that the structure shown in FIG. 20 does not constitute a specific limitation on the network device or the terminal device. For example, in some other embodiments of this application, the network device or the terminal device may include more or fewer components than those shown in the figure, some components may be combined, some components may be split, or the components may be differently arranged. The components shown in the figure may be implemented by using hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or the instructions are executed by a computer, a function in any one of the foregoing method embodiments is implemented.

This application further provides a computer program product. When the computer program product is executed by a computer, a function of any one of the foregoing method embodiments is implemented.

A person of ordinary skill in the art may understand that for convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separated, that is, may be located together in one place or may be distributed on a plurality of network units. A component displayed as a unit may or may not be a physical unit. A part or all of the units may be selected based on an actual requirement to achieve the objectives of the solutions of embodiments.

In addition, functional units in embodiments of this application may be integrated into one processing unit, each of the units may exist alone physically, or two or more than two units are integrated into one unit.

All or a part of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or a part of the procedures or functions described according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In this embodiment of this application, the computer may include the foregoing apparatuses.

Although this application is described with reference to embodiments herein, in a process of implementing this application that claims protection, a person skilled in the art may understand and implement another variation of the disclosed embodiments by viewing the accompanying drawings, disclosed content, and appended claims. In the claims, the word "comprising (comprising)" does not exclude another component or step, and "a" or "one" does not exclude a case of "a plurality of". A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to them without departing from the protection scope of this application. Correspondingly, the specification and the accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the scope of this application. In this way, provided that these modifications and variations of this application fall within the scope of the claims of this application and their equivalent technologies, this application is also intended to cover these modifications and variations.

## Claims

1. A method for reporting a capability, wherein the method comprises:
sending first information to a network device, wherein the first information indicates a capability of simultaneously transmitting and receiving of a terminal device on a carrier component CC pair or a bandwidth part BWP pair in a first frequency band, wherein
the simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair.

2. The method according to claim 1, wherein the first information indicates a minimum frequency domain guard interval used when the terminal device supports the simultaneously transmitting and receiving, and the minimum frequency domain guard interval indicates the capability of simultaneously transmitting and receiving of the terminal device on the CC pair or the BWP pair in the first frequency band.

3. The method according to claim 2, wherein the first frequency band comprises a first CC and a second CC, and a highest frequency of the first CC is less than a lowest frequency of the second CC; and
if a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

4. The method according to claim 3, wherein the first CC comprises a first BWP, and the second CC comprises a second BWP; and
if the frequency domain interval between the highest frequency of the first CC and the lowest frequency of the second CC is greater than or equal to the minimum frequency domain guard interval, the terminal device has a capability of simultaneously transmitting and receiving on the first BWP and the second BWP; or
if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

5. The method according to claim 2, wherein the first frequency band comprises a third CC, the third CC comprises a third BWP and a fourth BWP, and a highest frequency of the third BWP is less than a lowest frequency of the fourth BWP; and
if a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

6. The method according to any one of claims 2 to 5, wherein the first information comprises the minimum frequency domain guard interval; or the minimum frequency domain guard interval is a guard interval in a frequency domain guard interval group, the frequency domain guard interval group comprises one or more frequency domain guard intervals, and the first information comprises an index of the minimum frequency domain guard interval in the frequency domain guard interval group.

7. The method according to claim 1, wherein the first information comprises a first parameter, and the first parameter indicates that the terminal device has the capability of simultaneously transmitting and receiving on any CC pair in the first frequency band; or
the first information comprises a first parameter, and the first parameter indicates that the terminal device has the capability of simultaneously transmitting and receiving on any BWP pair in the first frequency band.

8. The method according to claim 1, wherein the first information comprises a second parameter, the second parameter indicates a first CC pair, and the terminal device has a capability of simultaneously transmitting and receiving on the first CC pair; or
the first information comprises a second parameter, the second parameter indicates a first BWP pair, and the terminal device has a capability of simultaneously transmitting and receiving on the first BWP pair.

9. The method according to claim 1, wherein if the first information comprises neither a first parameter nor a second parameter, the terminal device has no capability of simultaneously transmitting and receiving on any CC pair or any BWP pair in the first frequency band, wherein
the first parameter indicates that the terminal device has the capability of simultaneously transmitting and receiving on any CC pair or BWP pair in the first frequency band, the second parameter indicates a first CC pair or a first BWP pair, and the terminal device has a capability of simultaneously transmitting and receiving on the first CC pair or the first BWP pair.

10. The method according to any one of claims 1 or 7 to 9, wherein the method further comprises: receiving second information from the network device, wherein the second information is used to configure an available CC, and the available CC comprises a CC in the first frequency band.

11. A communication method, wherein the method comprises:
receiving first information from a terminal device, wherein the first information indicates a capability of simultaneously transmitting and receiving of the terminal device on a carrier component CC pair or a bandwidth part BWP pair in a first frequency band, wherein
the simultaneously transmitting and receiving means sending a signal on one CC in the CC pair while receiving a signal on the other CC in the CC pair, or the simultaneously transmitting and receiving means sending a signal on one BWP in the BWP pair while receiving a signal on the other BWP in the BWP pair.

12. The method according to claim 11, wherein the first information indicates a minimum frequency domain guard interval used when the terminal device supports the simultaneously transmitting and receiving, and the minimum frequency domain guard interval indicates the capability of simultaneously transmitting and receiving of the terminal device on the CC pair or the BWP pair in the first frequency band.

13. The method according to claim 12, wherein the first frequency band comprises a first CC and a second CC, and a highest frequency of the first CC is less than a lowest frequency of the second CC; and
if a frequency domain interval between the highest frequency of the first CC and the lowest frequency of the second CC is greater than or equal to the minimum frequency domain guard interval, the terminal device has a capability of simultaneously transmitting and receiving on the first CC and the second CC.

14. The method according to claim 13, wherein the first CC comprises a first BWP, and the second CC comprises a second BWP; and
if the frequency domain interval between the highest frequency of the first CC and the lowest frequency of the second CC is greater than or equal to the minimum frequency domain guard interval, the terminal device has a capability of simultaneously transmitting and receiving on the first BWP and the second BWP; or
if a frequency domain interval between a highest frequency of the first BWP and a lowest frequency of the second BWP is greater than or equal to the minimum frequency domain guard interval, the terminal device has a capability of simultaneously transmitting and receiving on the first BWP and the second BWP.

15. The method according to claim 12, wherein the first frequency band comprises a third CC, the third CC comprises a third BWP and a fourth BWP, and a highest frequency of the third BWP is less than a lowest frequency of the fourth BWP; and
if a frequency domain interval between the highest frequency of the third BWP and the lowest frequency of the fourth BWP is greater than or equal to the minimum frequency domain guard interval, the terminal device has a capability of simultaneously transmitting and receiving on the third BWP and the fourth BWP.

16. The method according to any one of claims 12 to 15, wherein the first information comprises the minimum frequency domain guard interval; or the minimum frequency domain guard interval is a guard interval in a frequency domain guard interval group, the frequency domain guard interval group comprises one or more frequency domain guard intervals, and the first information comprises an index of the minimum frequency domain guard interval in the frequency domain guard interval group.

17. The method according to claim 11, wherein the first information comprises a first parameter, and the first parameter indicates that the terminal device has the capability of simultaneously transmitting and receiving on any CC pair in the first frequency band; or
the first information comprises a first parameter, and the first parameter indicates that the terminal device has the capability of simultaneously transmitting and receiving on any BWP pair in the first frequency band.

18. The method according to claim 11, wherein the first information comprises a second parameter, the second parameter indicates a first CC pair, and the terminal device has a capability of simultaneously transmitting and receiving on the first CC pair; or
the first information comprises a second parameter, the second parameter indicates a first BWP pair, and the terminal device has a capability of simultaneously transmitting and receiving on the first BWP pair.

19. The method according to claim 11, wherein if the first information comprises neither a first parameter nor a second parameter, the terminal device has no capability of simultaneously transmitting and receiving on any CC pair or any BWP pair in the first frequency band, wherein
the first parameter indicates that the terminal device has the capability of simultaneously transmitting and receiving on any CC pair or BWP pair in the first frequency band, the second parameter indicates a first CC pair or a first BWP pair, and the terminal device has a capability of simultaneously transmitting and receiving on the first CC pair or the first BWP pair.

20. The method according to any one of claims 11 or 17 to 19, wherein the method further comprises: sending second information to the terminal device, wherein the second information is used to configure an available CC, and the available CC comprises a CC in the first frequency band.

21. A method for reporting a capability, wherein the method comprises:
sending first information to a network device, wherein the first information indicates a capability of simultaneously transmitting and receiving of a terminal device on a subband pair in a first frequency band, and the simultaneously transmitting and receiving means sending a signal on one subband in the subband pair while receiving a signal on the other subband in the subband pair, wherein
the first frequency band comprises a first subband, a second subband, and a third subband, the first subband comprises a part or all of an uplink frequency band of a second frequency band, the second subband comprises a part or all of a downlink frequency band of the second frequency band, and the third subband comprises a frequency domain range of an interval between the uplink frequency band of the second frequency band and the downlink frequency band of the second frequency band.

22. The method according to claim 21, wherein an uplink frequency band of the first frequency band and a downlink frequency band of the first frequency band completely overlap.

23. The method according to claim 21 or 22, wherein the first information indicates that the terminal device has a capability of simultaneously transmitting and receiving on a first subband pair, but has no capability of simultaneously transmitting and receiving on a second subband pair or a third subband pair, wherein
the first subband pair comprises the first subband and the second subband, the second subband pair comprises the first subband and the third subband, and the third subband pair comprises the second subband and the third subband.

24. The method according to claim 23, wherein the first information comprises an index of the first frequency band and flag information, and the flag information indicates that the terminal device has the capability of simultaneously transmitting and receiving on the first subband pair, but has no capability of simultaneously transmitting and receiving on the second subband pair or the third subband pair.

25. A communication method, wherein the method comprises:
receiving first information from a terminal device, wherein the first information indicates a capability of simultaneously transmitting and receiving of the terminal device on a subband pair in a first frequency band, and the simultaneously transmitting and receiving means sending a signal on one subband in the subband pair while receiving a signal on the other subband in the subband pair, wherein
the first frequency band comprises a first subband, a second subband, and a third subband, the first subband comprises a part or all of an uplink frequency band of a second frequency band, the second subband comprises a part or all of a downlink frequency band of the second frequency band, and the third subband comprises a frequency domain range of an interval between the uplink frequency band of the second frequency band and the downlink frequency band of the second frequency band.

26. The method according to claim 25, wherein an uplink frequency band of the first frequency band and a downlink frequency band of the first frequency band completely overlap.

27. The method according to claim 25 or 26, wherein the first information indicates that the terminal device has a capability of simultaneously transmitting and receiving on a first subband pair, but has no capability of simultaneously transmitting and receiving on a second subband pair or a third subband pair, wherein
the first subband pair comprises the first subband and the second subband, the second subband pair comprises the first subband and the third subband, and the third subband pair comprises the second subband and the third subband.

28. The method according to claim 27, wherein the first information comprises an index of the first frequency band and flag information, and the flag information indicates that the terminal device has the capability of simultaneously transmitting and receiving on the first subband pair, but has no capability of simultaneously transmitting and receiving on the second subband pair or the third subband pair.

29. A communication apparatus, wherein the communication apparatus comprises a processor; and the processor is configured to run a computer program or instructions, to enable the communication apparatus to perform the method according to any one of claims 1 to 10, or enable the communication apparatus to perform the method according to any one of claims 21 to 24.

30. A communication apparatus, wherein the communication apparatus comprises a processor; and the processor is configured to run a computer program or instructions, to enable the communication apparatus to perform the method according to any one of claims 11 to 20, or enable the communication apparatus to perform the method according to any one of claims 25 to 28.

31. A computer-readable storage medium, wherein the computer-readable storage medium stores computer instructions or a program, and when the computer instructions or the program is run on a computer, the method according to any one of claims 1 to 10, or the method according to any one of claims 21 to 24 is performed.

32. A computer-readable storage medium, wherein the computer-readable storage medium stores computer instructions or a program, and when the computer instructions or the program is run on a computer, the method according to any one of claims 11 to 20, or the method according to any one of claims 25 to 28 is performed.

33. A computer program product, wherein the computer program product comprises computer instructions; and when a part or all of the computer instructions are run on a computer, the method according to any one of claims 1 to 10, or the method according to any one of claims 21 to 24 is performed.

34. A computer program product, wherein the computer program product comprises computer instructions; and when a part or all of the computer instructions are run on a computer, the method according to any one of claims 11 to 20, or the method according to any one of claims 25 to 28 is performed.
